# EUROPEAN PATENT APPLICATION

(11) **EP 1 553 616 A1**
(43) Date of publication of application: **13.07.2005**
(21) Application number: 02788578.9
(22) Date of filing: 18.10.2002
(51) Int. Cl.: H01J 31/12, H01J 29/04

(54) **COLD CATHODE TYPE FLAT PANEL DISPLAY**

(71) Applicant: Hitachi, Ltd., Tokyo 100-8280 (JP)
(72) Inventor: SAGAWA, Masakazu, c/o Hitachi Res. Lab. Ltd., Hitachi-shi, Ibaraki 319-1292 (JP); KUSUNOKI, Toshiaki, c/o Hitachi Res. Lab. Ltd., Hitachi-shi, Ibaraki 319-1292 (JP); SUZUKI, Mutsumi, c/o Hitachi Res. Lab. Ltd., Hitachi-shi, Ibaraki 319-1292 (JP)
(74) Representative: Calderbank, Thomas Roger
(86) International application number: PCT/JP2002/010835
(87) International publication number: WO 2004/036615

(57) **Abstract**

A second interlayer insulation layer (15) is formed under an upper wiring electrode (16) serving as a power feed line to an upper electrode (13) in each thin-film type electron source array so as to prevent a failure of short-circuit. Further, an electron emission portion is limited by the second interlayer insulationlayer (15) so as to cover defects unevenly distributed in the border between an electron acceleration layer (12) and a first interlayer insulation layer (14). Thus, a failure of time dependent insulation breakdown is suppressed.

## Description

### [Technical Field]

The present invention relates to a cold cathode type flat panel display having a substrate and a second substrate, the substrate including thin-film type electron sources arranged in arrays, each thin-film type electron source including a lower electrode, an upper electrode, and an electron acceleration layer such as an insulation layer retained between the upper electrode and the lower electrode, each thin-film type electron source emitting electrons from the upper electrode in response to a voltage applied between the lower electrode and the upper electrode, the second substrate including a fluorescent screen in which a plurality of phosphors to be excited by the electrons emitted from the first substrate are arrayed.

### [Background Art]

So-called flat panel displays are known as TV receivers, personal computer monitors, and other display devices of various electronic equipment. Such flat panel displays include liquid crystal displays, organic electroluminescent (organic EL) displays, plasma displays, field emission type panel displays (field emission displays: FEDs), etc.

Particularly of the field emission type panel displays, cold cathode type flat panel displays using thin-film type electron sources as electron emission sources thereof have come to the stage of practical use. The thin-film type electron sources are based on a three-layer thin film structure of an upper electrode, an electron acceleration layer and a lower electrode so as to emit electrons into a vacuum from the surface of the upper electrode in response to a voltage applied between the upper electrode and the lower electrode.

For example, there are an MIM (Metal-Insulator-Metal) type comprised of a metal-insulator-metal laminate, an MIS (Metal-Insulator-Semiconductor) type comprised of a metal-insulator-semiconductor laminate, a metal-insulator-semiconductor-metal type, etc.

The MIM type is, for example, disclosed in JP-A-7-65710. As the metal-insulator-semiconductor type, an MOS type has been reported (see J. Vac. Sci. Techonol. B11 (2) p. 429-432 (1993)). As the metal-insulator-semiconductor-metal type, an HEED type (disclosed in High-Efficiency-Electro-Emission Device, Jpn. J. Appl. Phys. , Vol. 36, p. L939 or the like), an EL type (disclosed in Electroluminescence, OYO-BUTURI, Vol. 63, No. 6, p.592 or the like), a porous silicon type (disclosed in OYO-BUTURI, Vol. 66, No. 5, p.437 or the like), etc. have been reported.

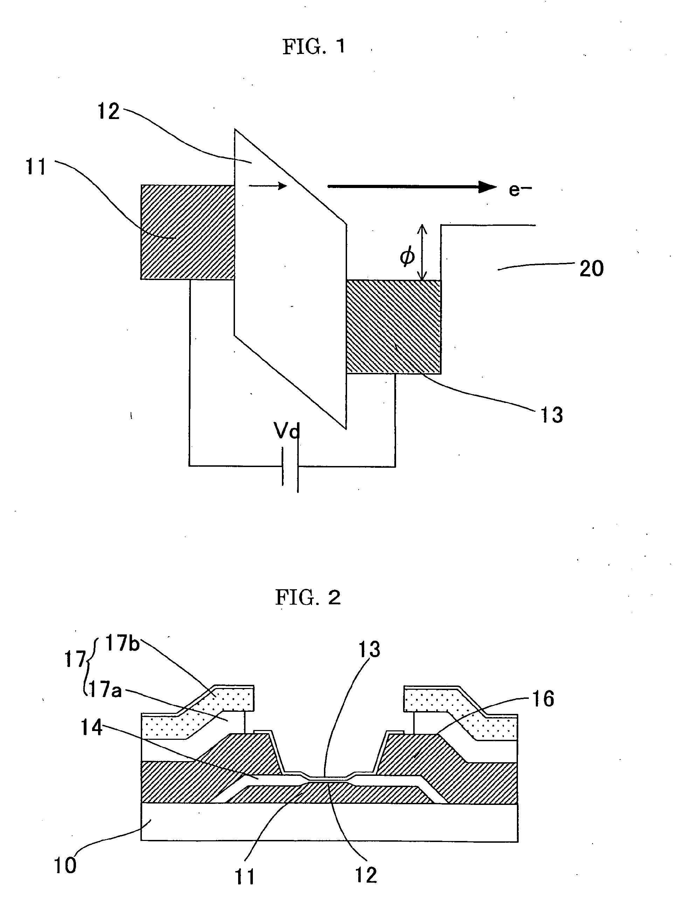

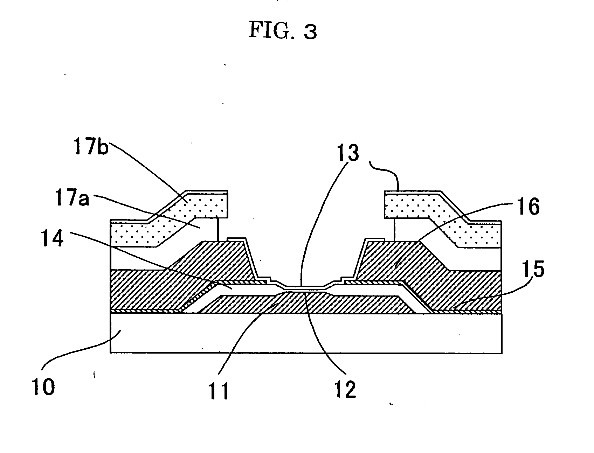

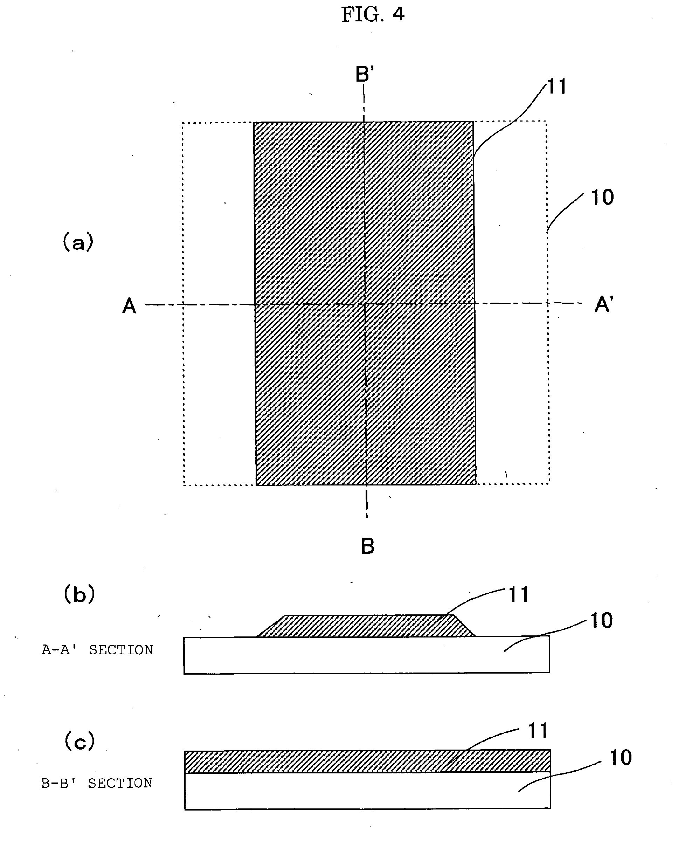

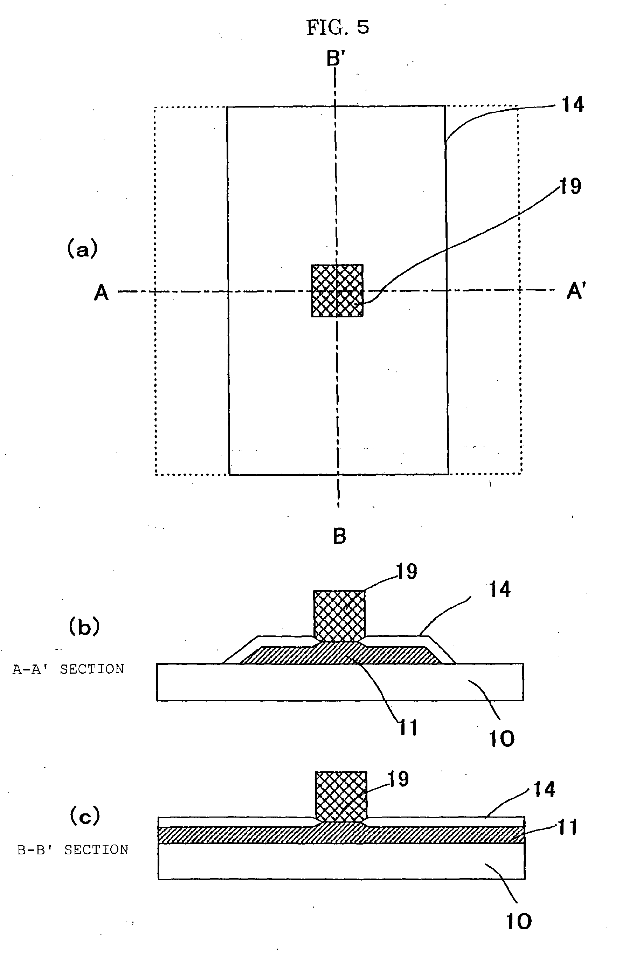

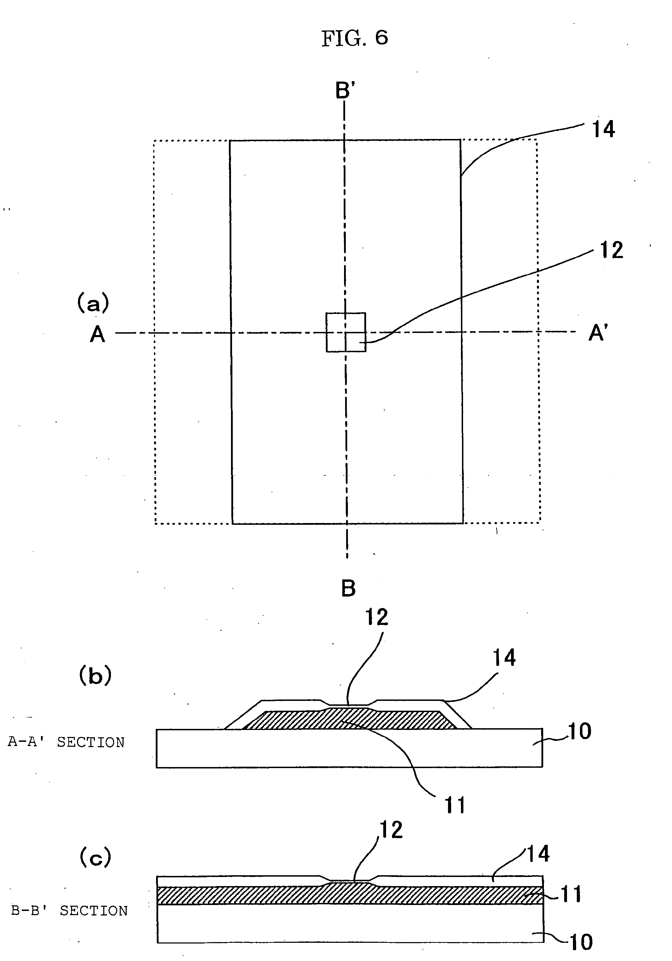

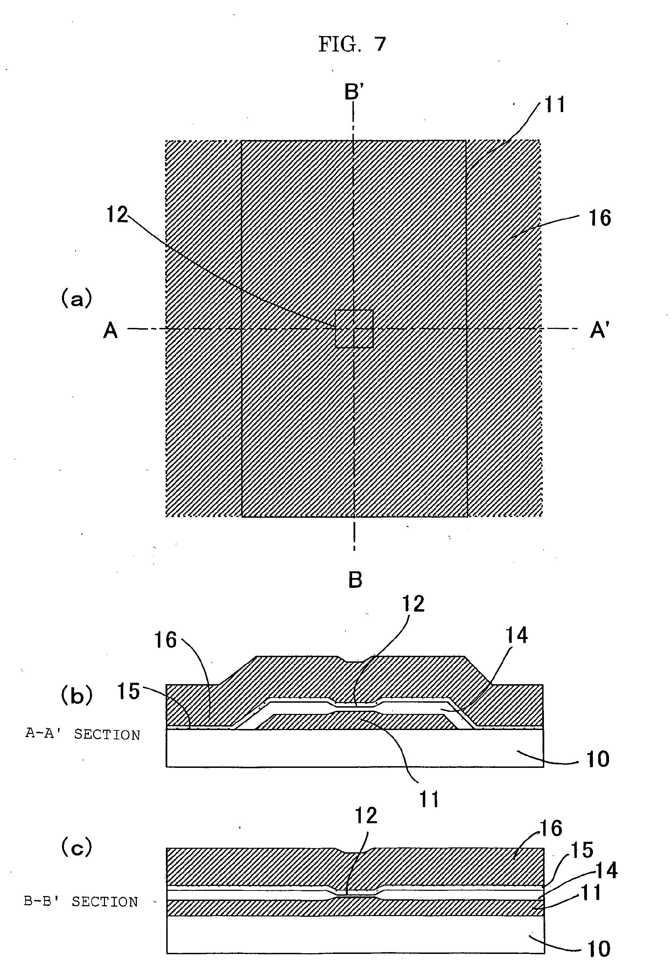

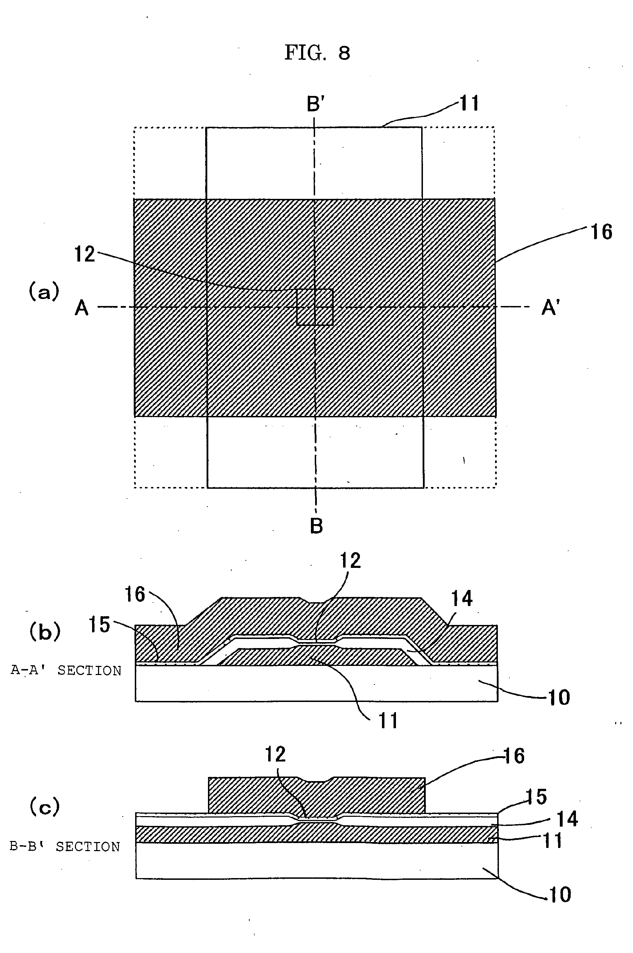

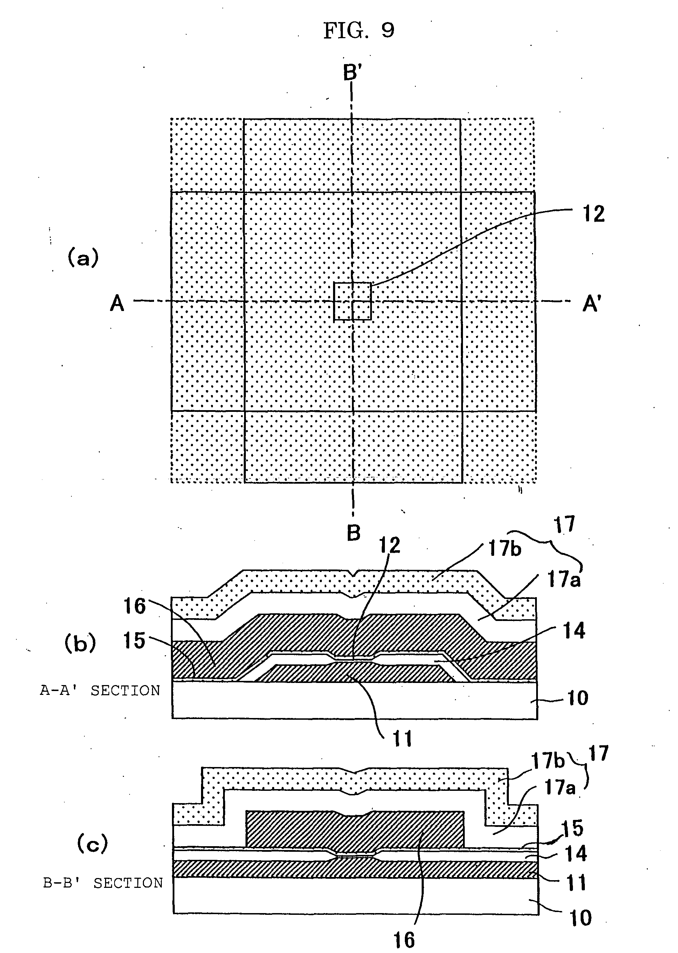

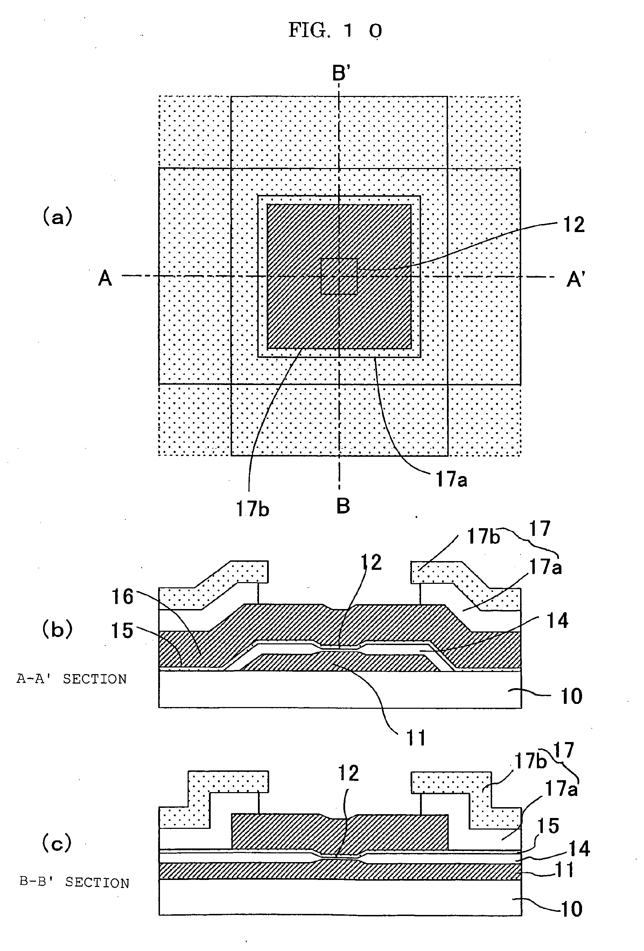

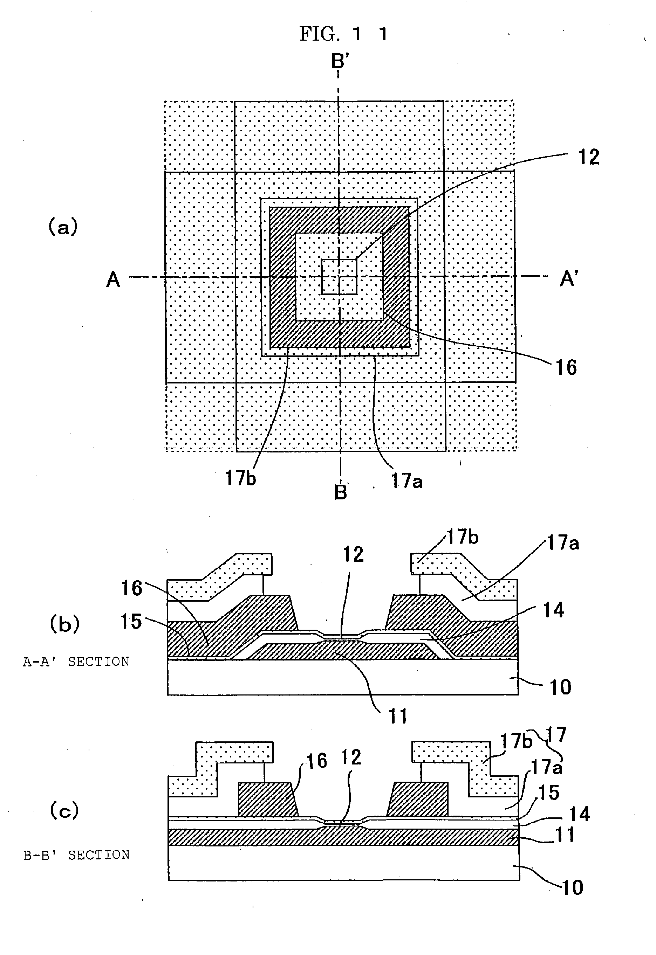

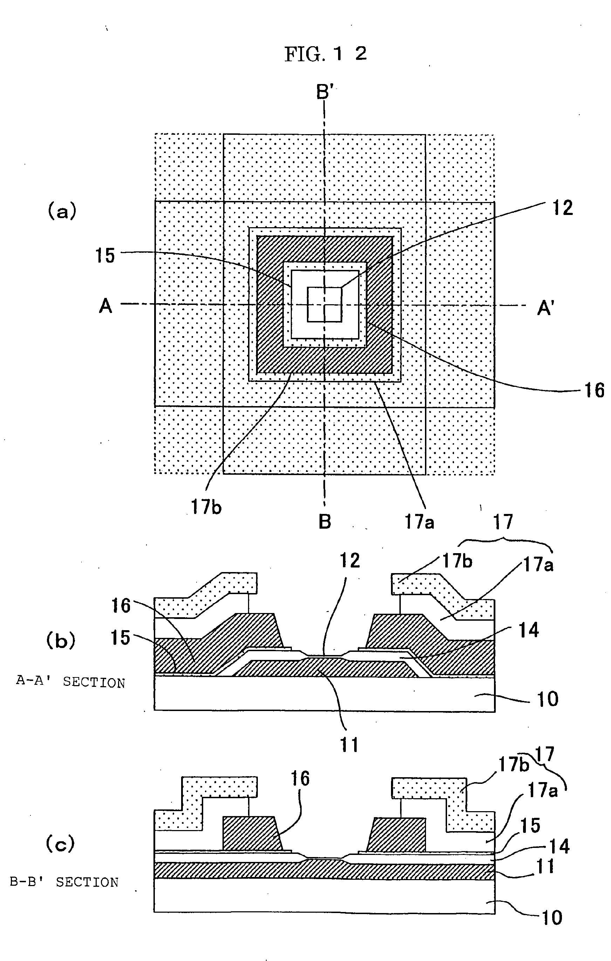

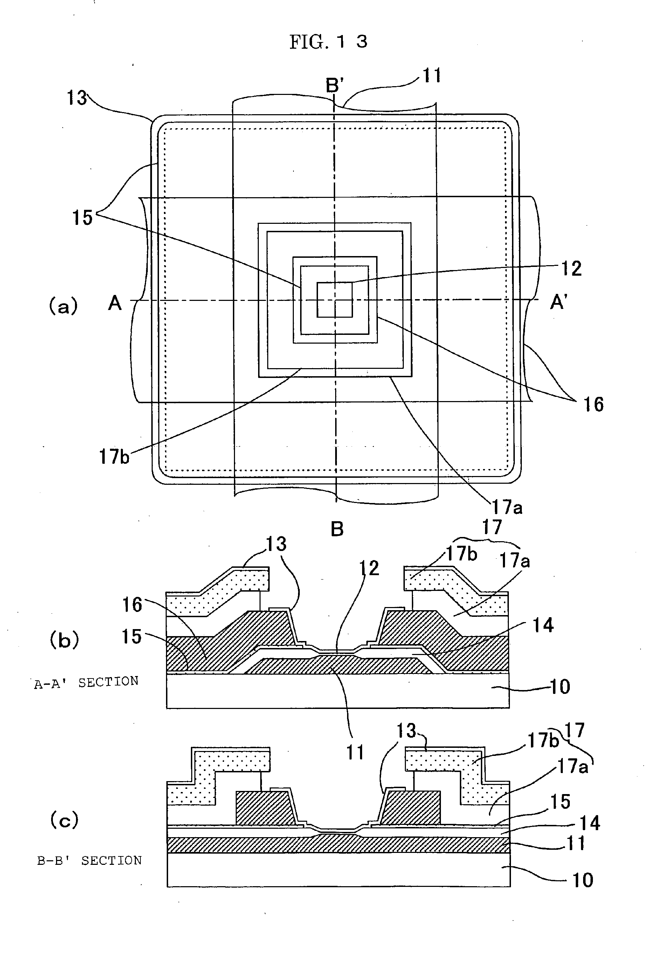

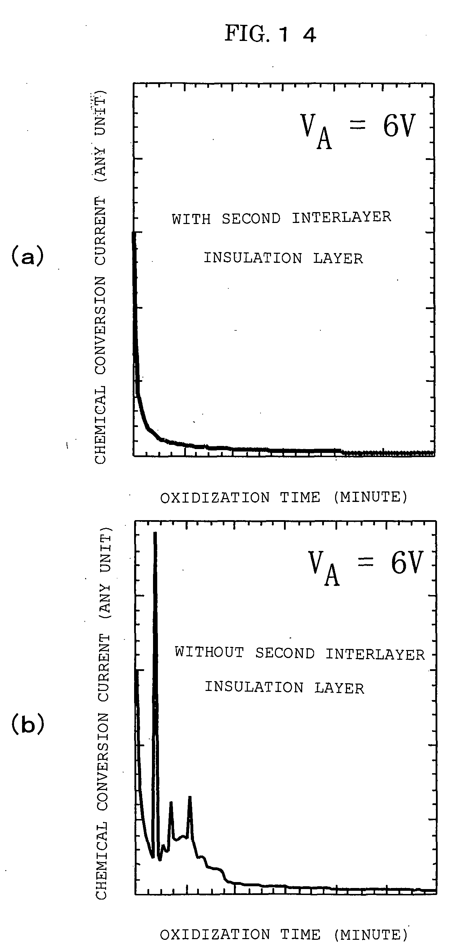

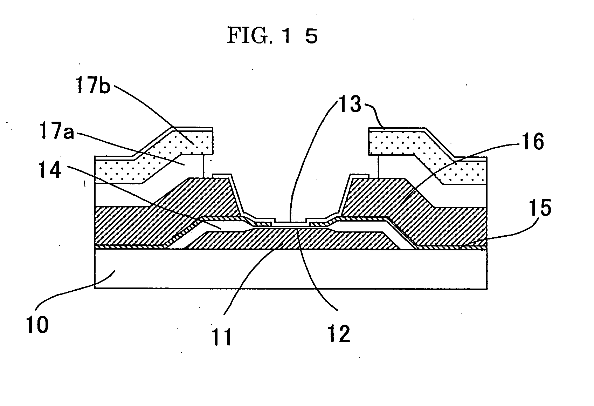

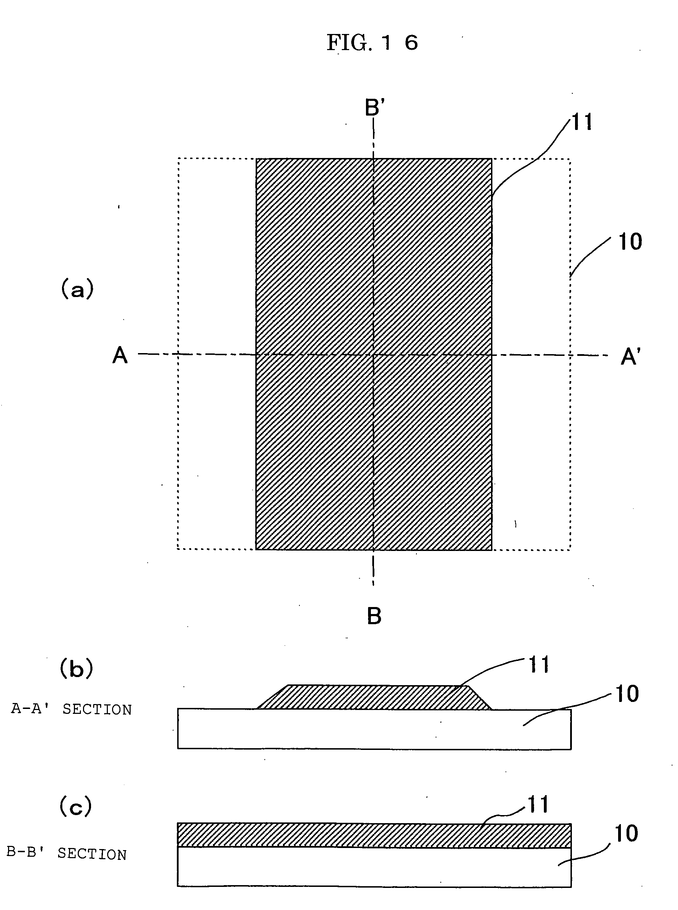

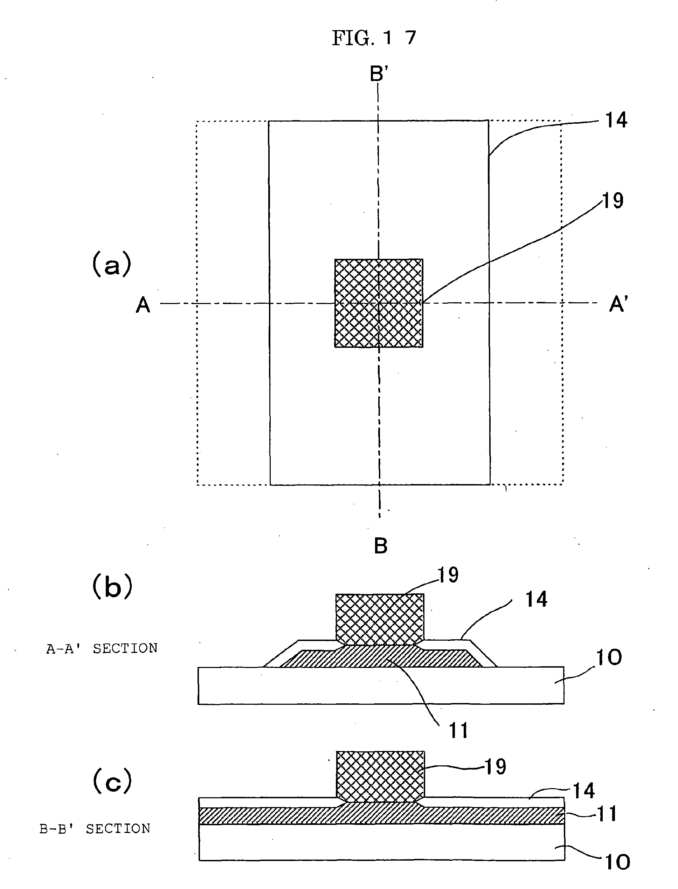

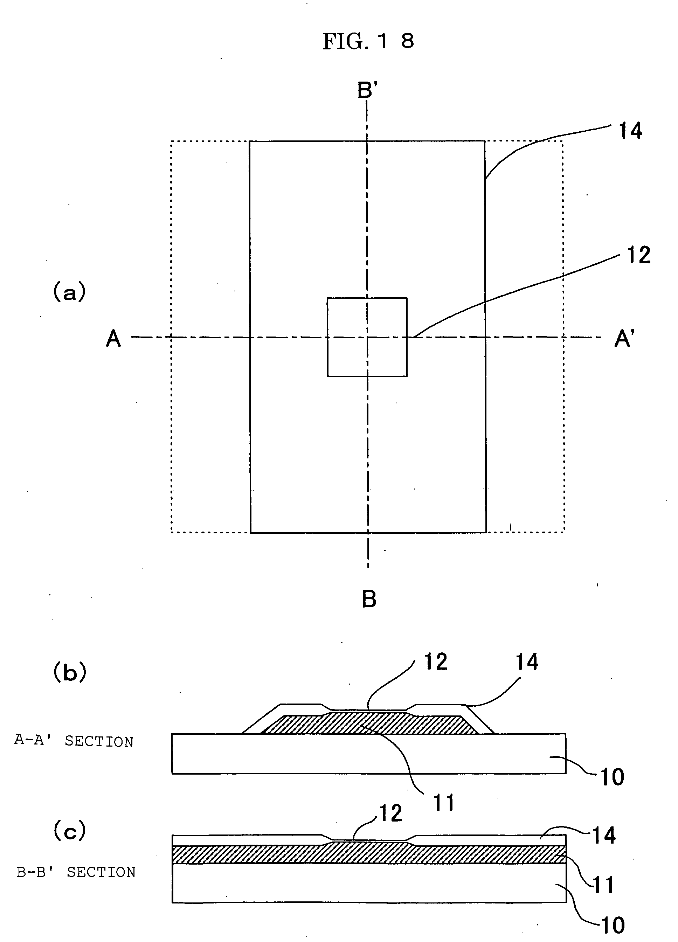

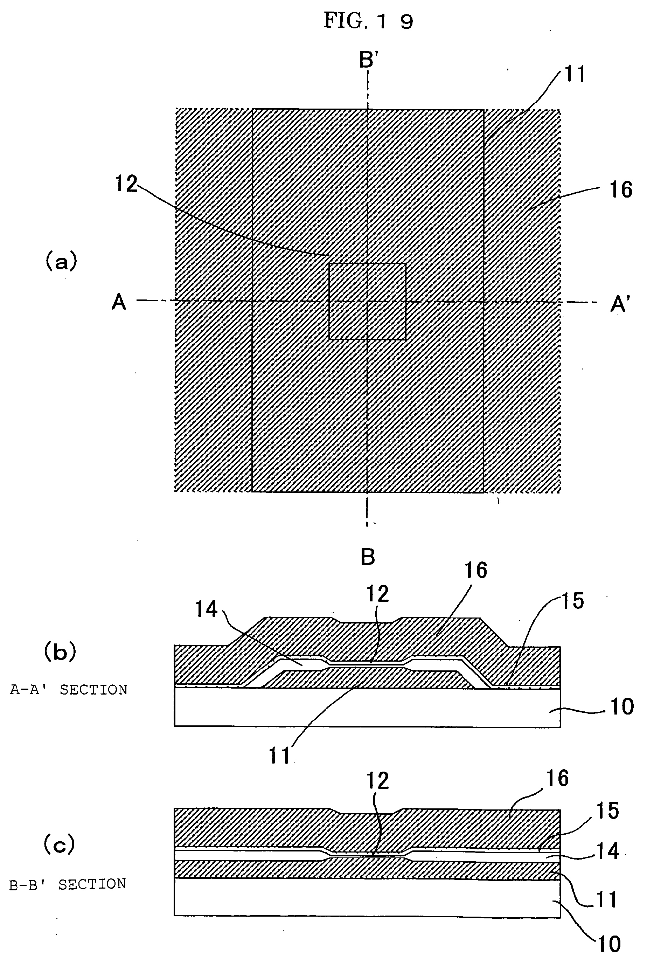

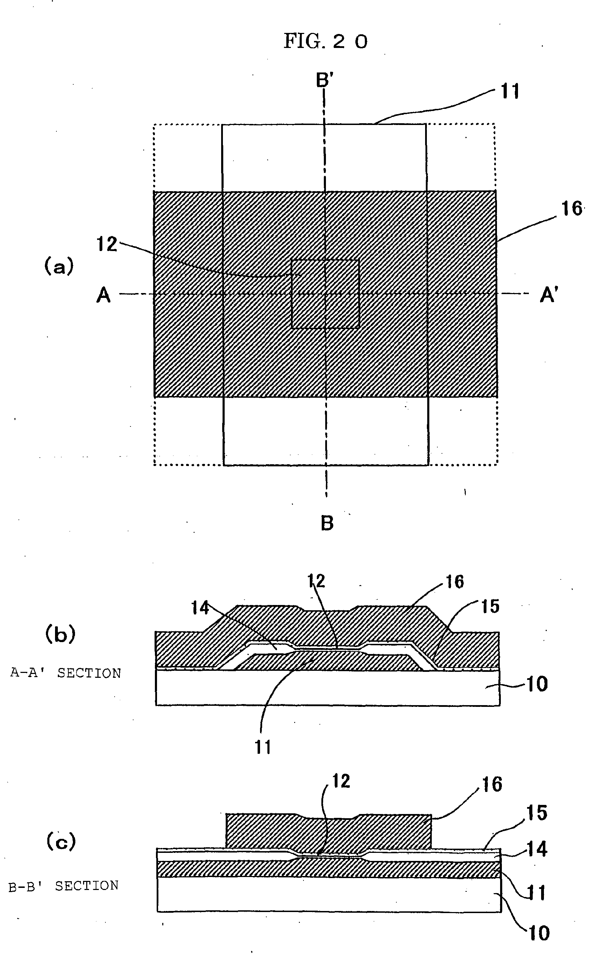

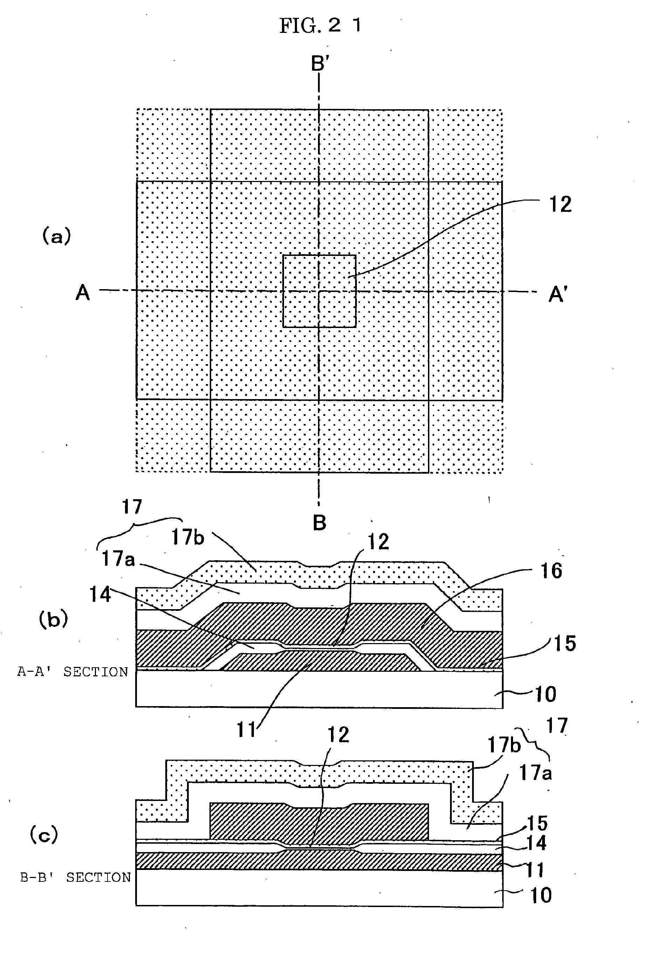

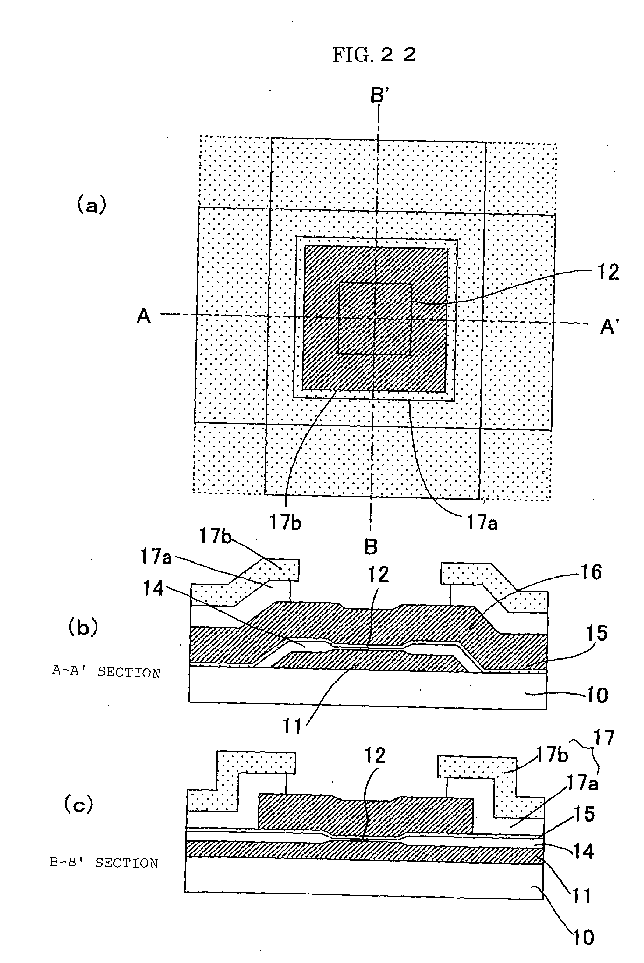

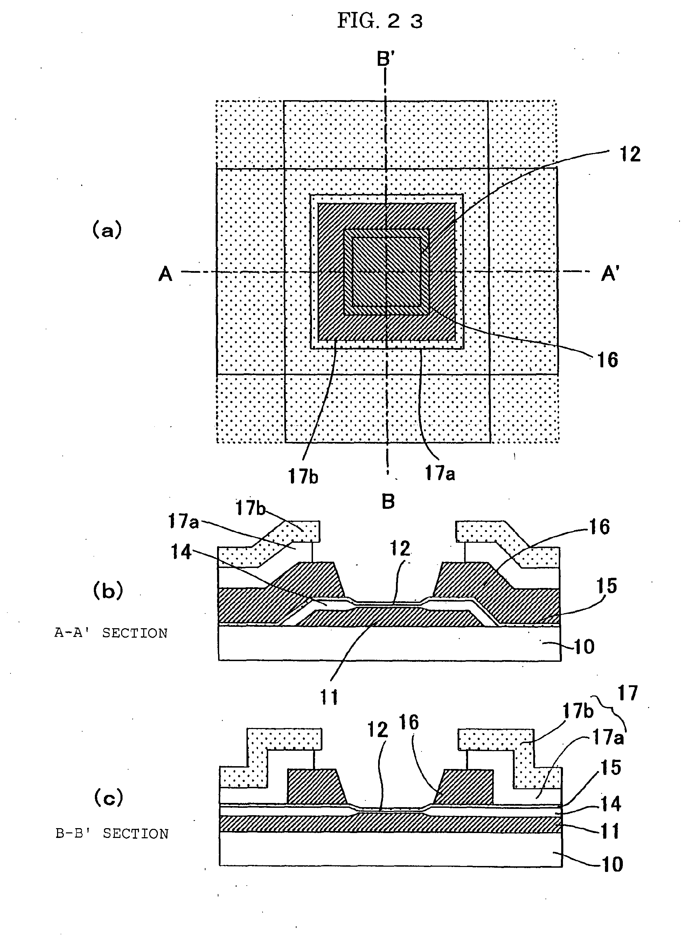

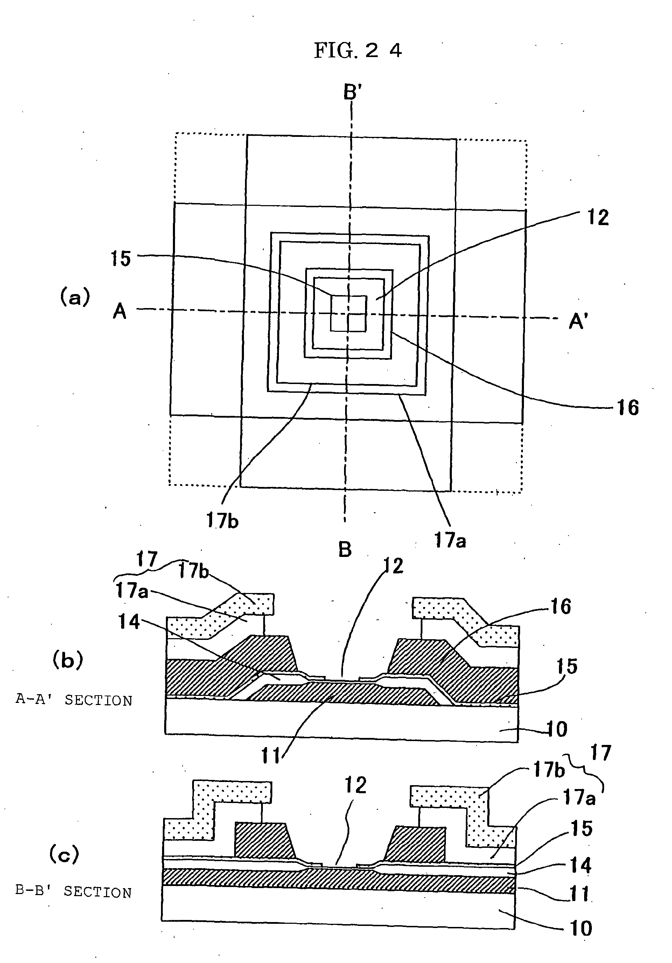

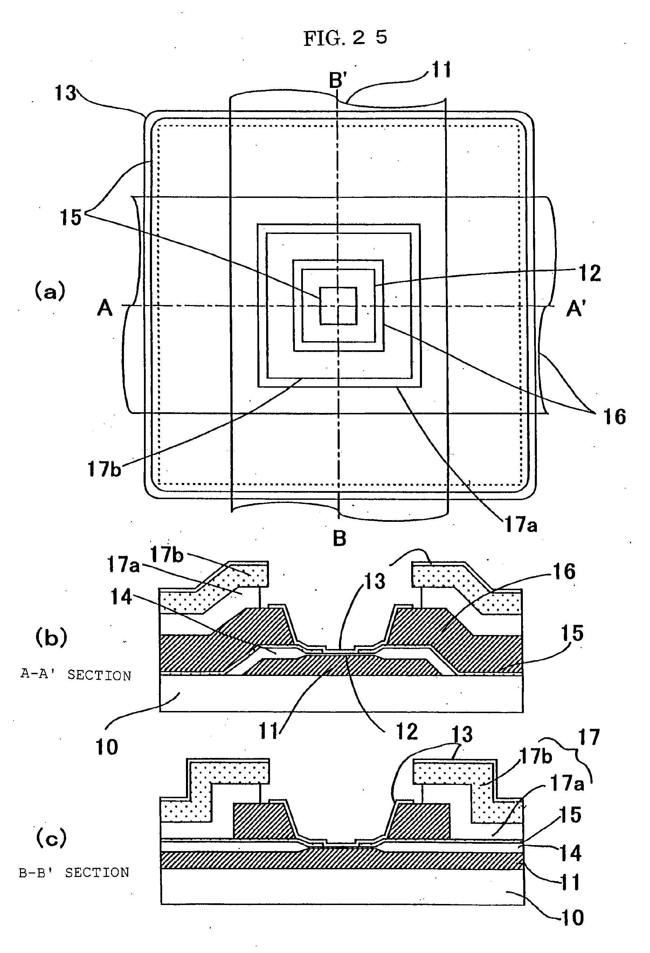

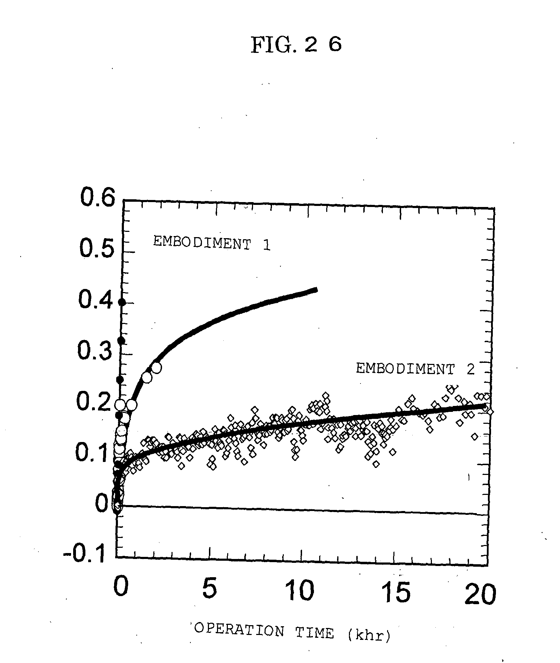

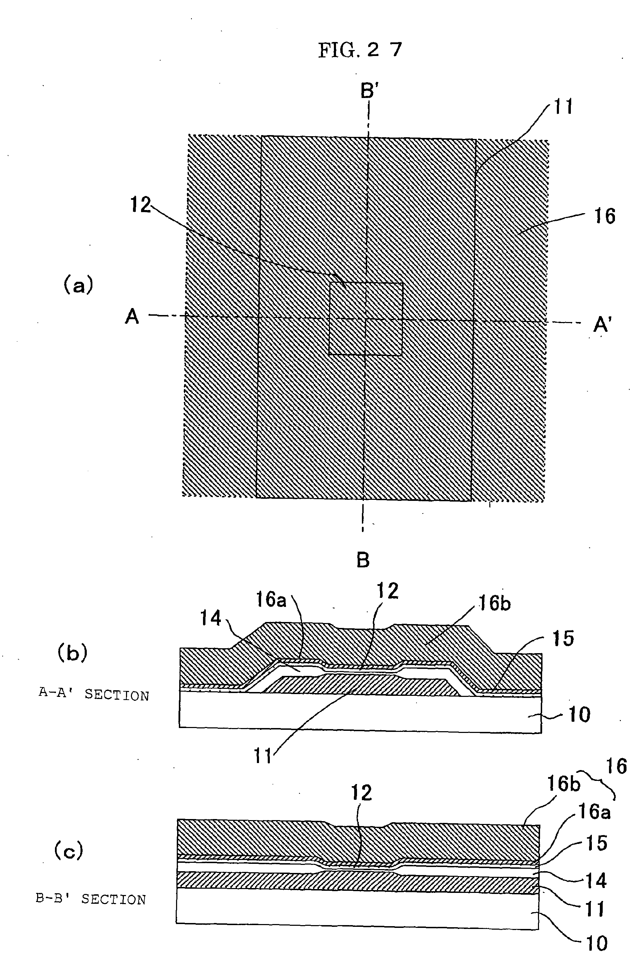

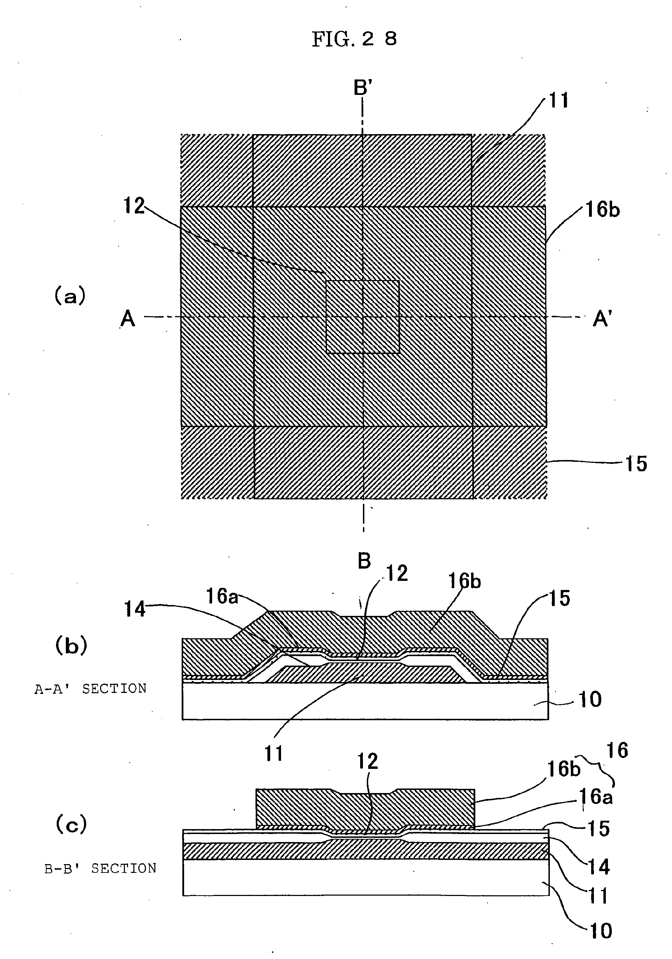

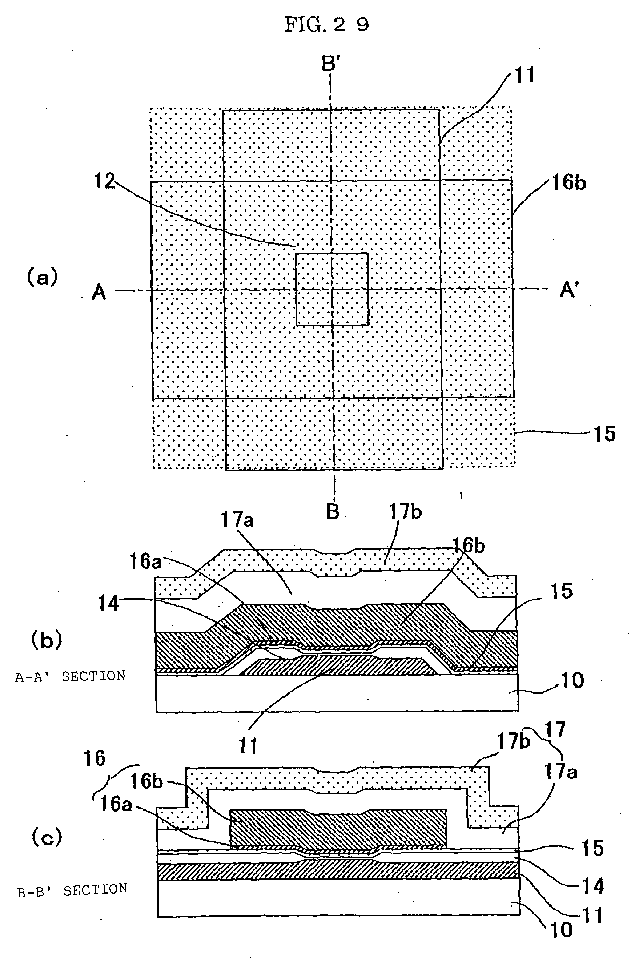

Fig. 1 is a schematic view for explaining the principle of operation of a thin-film type electron source using an MIM type by way of example. In addition, Fig. 2 is a schematic sectional view for explaining the elemental structure of the thin-film type electron source in the background art. In Fig. 1, the reference numeral 11 represents a lower electrode; 12, an insulation layer; 13, an upper electrode; and 20, a vacuum. When a driving voltage Vd is applied between the upper electrode 13 and the lower electrode 11 so as to set an electric field in the insulation layer 12 to reach about 1-10 MV/cm, electrons near the Fermi level in the lower electrode 11 penetrate a barrier due to a tunneling phenomenon, so as to be injected into a conduction band of the insulation layer 12 and the upper electrode 13. Thus, hot electrons are formed.

These hot electrodes lose their energy due to scattering in the insulation layer 12 and in the upper electrode 13. However, some hot electrons having energy not smaller than a work function φ of the upper electrode 13 are emitted into the vacuum 20.

Although some of the other thin-filmtype electron sources are more or less different in principle, they are common in that hot electrons are emitted through the thin upper electrode 13.

Electron beams can be generated at any place when such thin-film type electron sources are formed in a matrix out of a plurality of upper electrodes 13 and a plurality of lower electrodes 11 crossing each other at right angles. Thus, the thin-film type electron sources can be used as electron sources of an image display device or the like. Emission of electrons has been hitherto observed in an MIM (Metal-Insulator-Metal) structure such as an Au-Al₂O₃-Al structure or the like.

Incidentally, typically when thin-film type electron source arrays are formed in such a matrix structure, an interlayer insulation layer 14 for limiting an electron emission portion and preventing electric field concentration on a wiring terminal portion of the lower electrode 11 and short-circuit between the two electrodes, and an upper electrode feeder wiring 15 for feeding power to an upper electrode 13 which is thin and high in sheet resistance, are formed to avoid the electron emission portion, as shown in Fig. 2. The reference numeral 10 represents a substrate; 17, a surface protective layer; 17a, a surface protective film lower layer; and 17a, a surface protective film upper layer.

In the thin-film electron source arrays, a voltage is applied to the XY matrix of the lower electrodes 11 and the upper electrodes 13 with the upper electrode feeder wirings 16 so as to perform an image display. Therefore, insulation between those electrodes is important. When there is a failure in insulation, the lower electrodes 11 electrically short-circuit with the upper electrodes 13 or the upper electrode feeder wirings 16 so as to produce image defects. It is therefore desired that there is no defect in a tunnel insulation layer 12 serving as an electron acceleration layer, and the interlayer insulation film 14 for limiting each electron emission portion.

Typically the failure in insulation is categorized into two kinds of modes, that is, time zero insulation breakdown and time dependent insulation breakdown. The time zero insulation breakdown is a mode in which breakdown occurs as soon as a voltage applied between electrodes. In an MIM type electron source, this failure is observed in the interlayer insulation layer 14 for securing insulation between the lower electrode 11 and the upper electrode feeder wiring 16.

On the other hand, the time dependent insulation breakdown is a mode in which no breakdown occurs initially when a voltage is applied between electrodes, but breakdown occurs gradually when the voltage is continuously applied. In an MIM type electron source, this breakdown mode appears in the tunnel insulation film 12 for securing insulation between the lower electrode 11 and the upper electrode feeder wiring 16.

In the background art, an electrochemical film formation process called anodization has been used to form the tunnel insulation film 12 or the interlayer insulation film 14. This is because the process is remarkably superior in film quality and film thickness uniformity to any other film formation process, and suitable for forming large-scale (large-area) arrays.

However, it can be noted that the use of anodization causes the following problems (1) and (2).
(1) There occurs a failure of time zero insulation breakdown when a site with no current flowing appears due to foreignmatters or the like adhering to the surface.
(2) In an MIM type electron source, a thick oxide film (interlayer insulation layer 14) and a thin oxide film (tunnel insulation layer 12) are made selectively using a manner of local oxidation. In this case, a weak spot causing time dependent insulation breakdown is provided in the tunnel insulation film due to a transition region lying in the boundary between the two films and having an in-between characteristic of the two films.

The aforementioned problems (1) and (2) cause a so-called pixel defect, and lower the reliability of a cold cathode type flat panel display. Solution for these problems has been required.

An object of the present invention is to solve the foregoing problems of the background art and to provide a cold cathode type flat panel display in which occurrence of pixel defects is reduced to improve the reliability.

### [Disclosure of the Invention]

In order to attain the foregoing object, according to the present invention, there is provided a cold cathode type flat panel display including a substrate and a fluorescent screen, the substrate including thin-film type electron sources arranged in arrays, each thin-film type electron source including a lower electrode, an upper electrode, and an electron acceleration layer such as an insulation layer retained between the upper electrode and the lower electrode, each thin-film type electron source emitting electrons from the upper electrode in response to a voltage applied between the lower electrode and the upper electrode, wherein:
a first interlayer insulation layer for limiting a region of the electron acceleration layer and an upper electrode feeder wiring serving as a power feed line to the upper electrode are provided in each of the arrays of the thin-film type electron sources, and a second interlayer insulation layer is further provided between the upper electrode feeder wiring and the first interlayer insulation layer. Thus, a failure of time zero insulation breakdown is suppressed.

In addition, according to the present invention, an opening portion of the second interlayer insulation layer is provided on the inner side of the electron acceleration layer region so as to limit an electron emission region. Thus, occurrence of a weak spot causing the time dependent insulation breakdown is avoided.

Particularly the present invention is effective in the case where the first interlayer insulation layer is an anodic oxide film, and the second interlayer insulation layer is formed by a deposition process. In addition, the present invention is effective in the case where the lower electrode is made of Al or an Al alloy, the first interlayer insulation layer is an anodic oxide film of the Al or Al alloy of the lower electrode, and the second interlayer insulation layer is made of an insulation film material which can be selectively etched with respect to the lower electrode and the anodic oxide film thereof.

### [Brief Description of the Drawings]

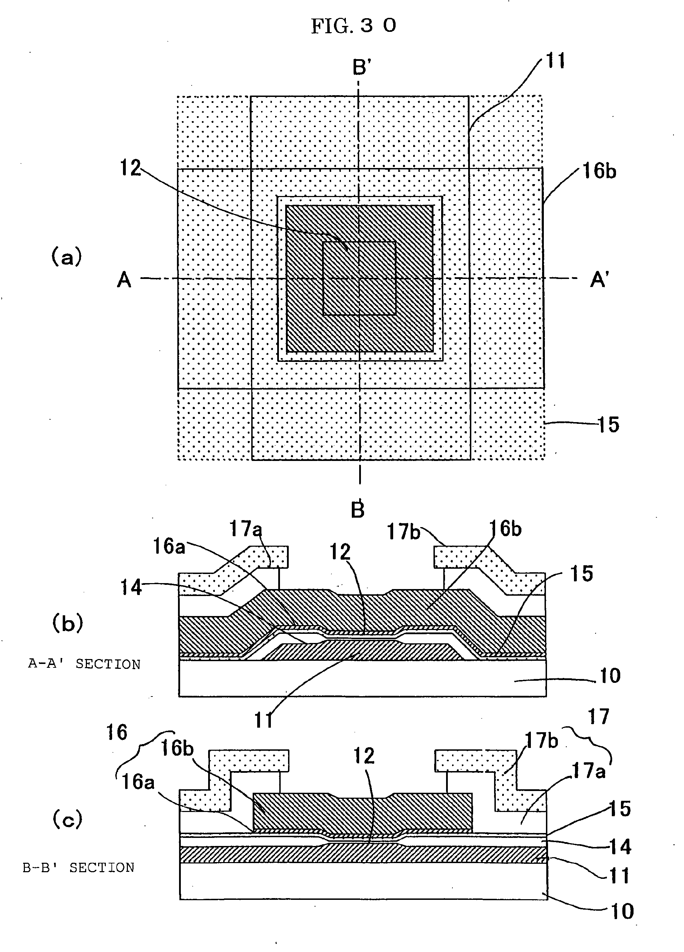

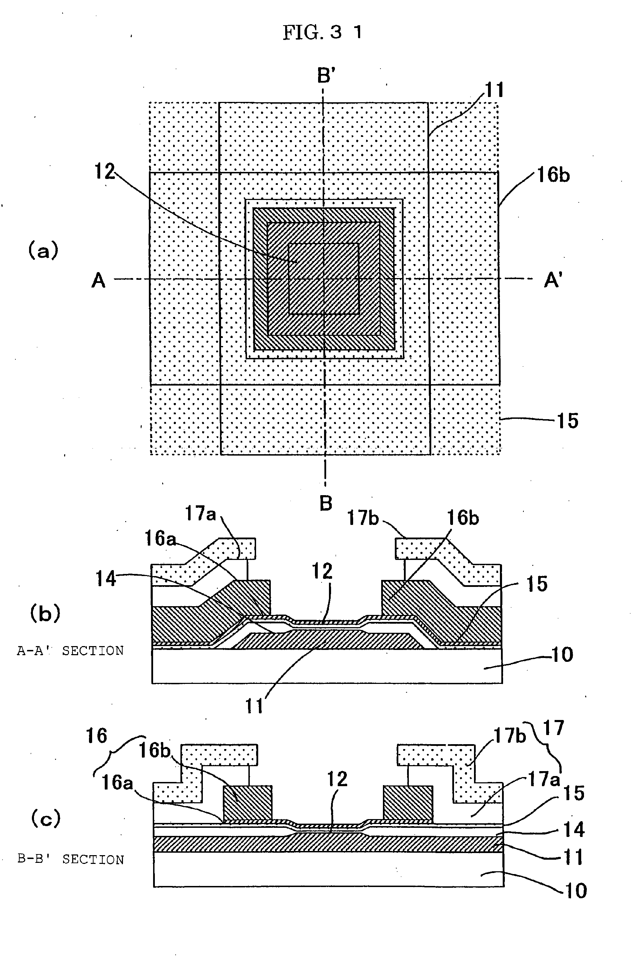

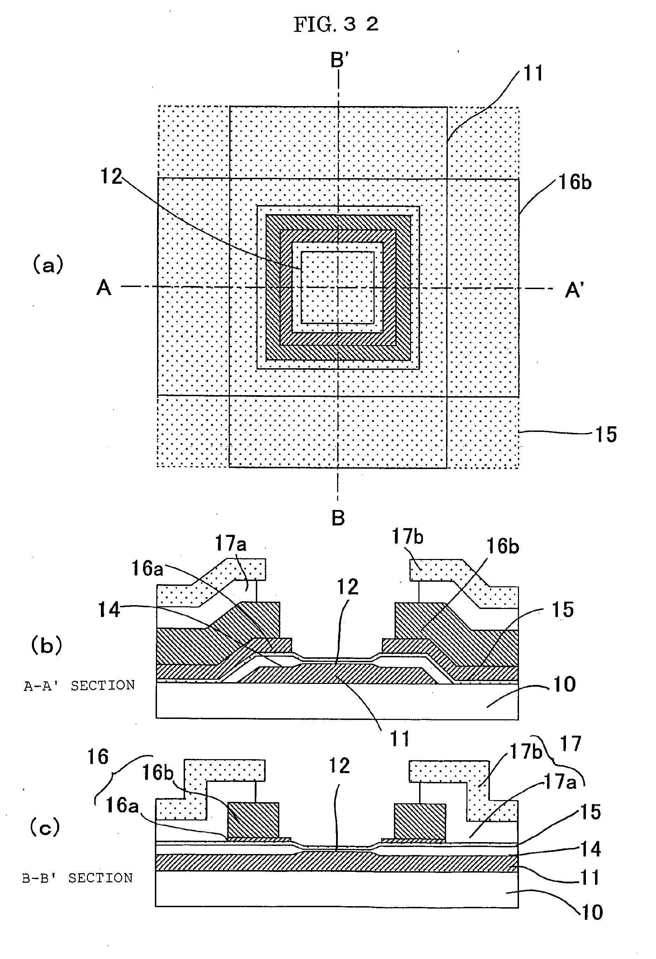

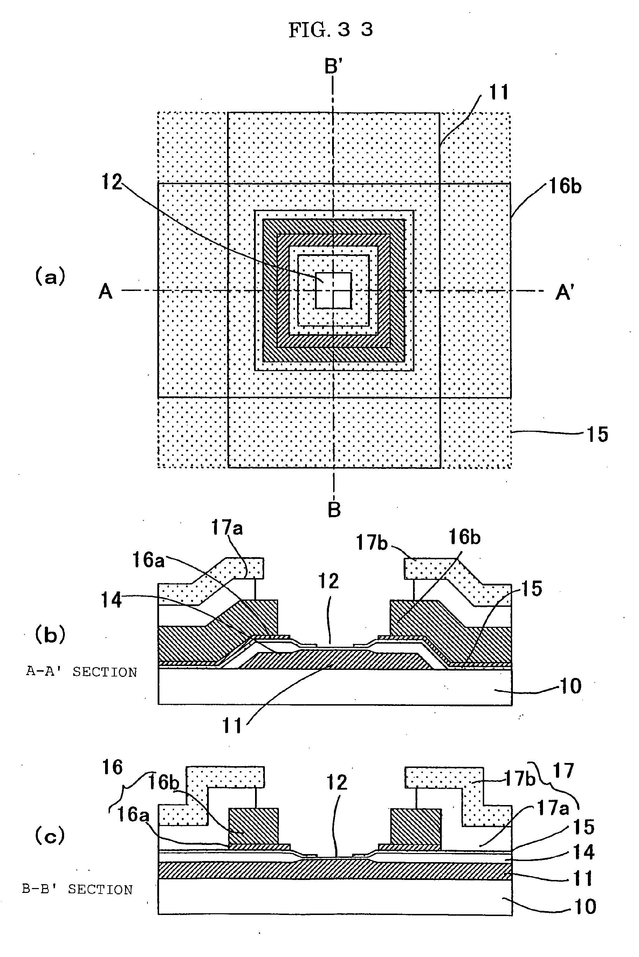

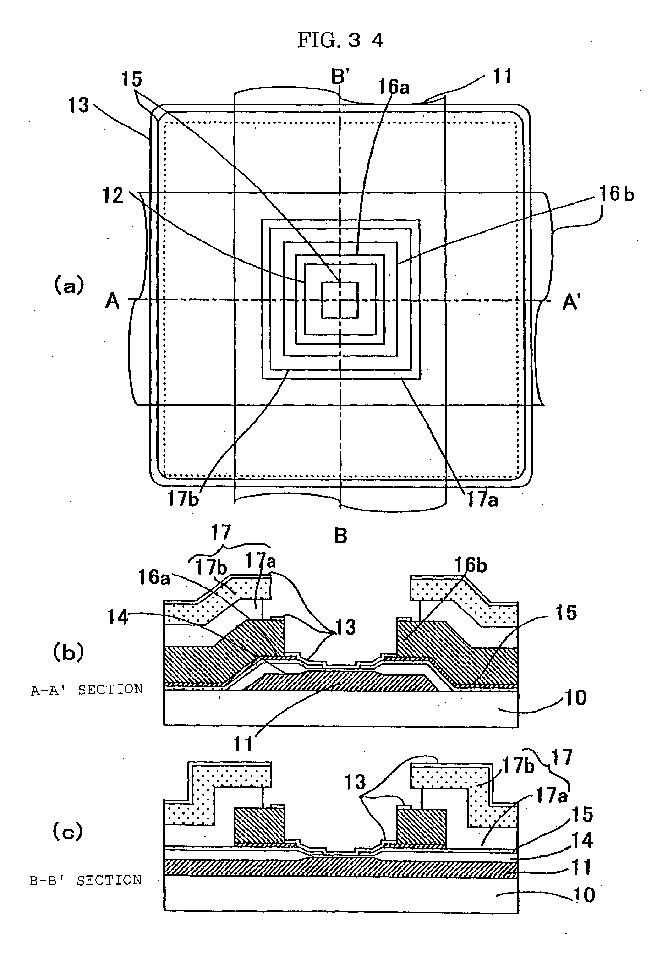

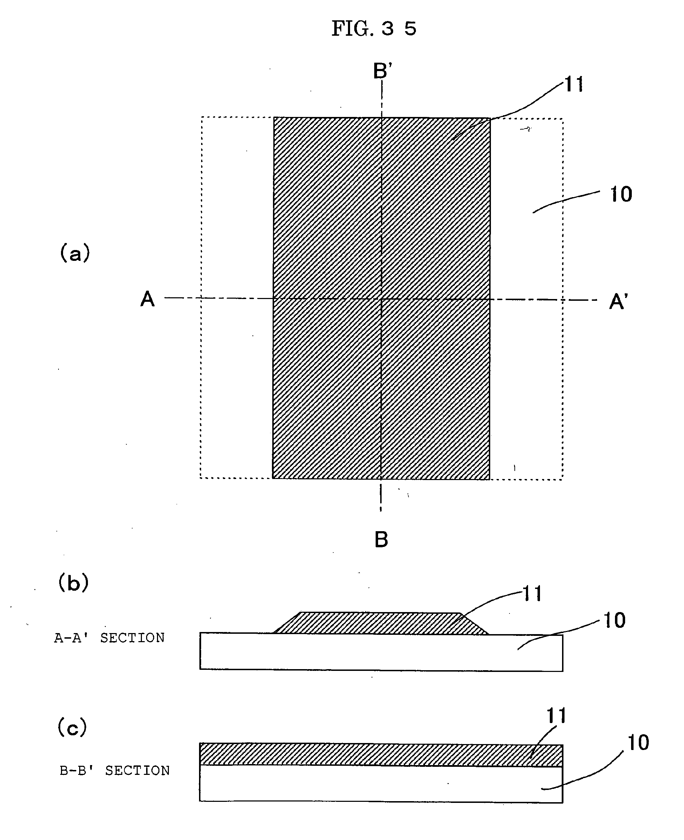

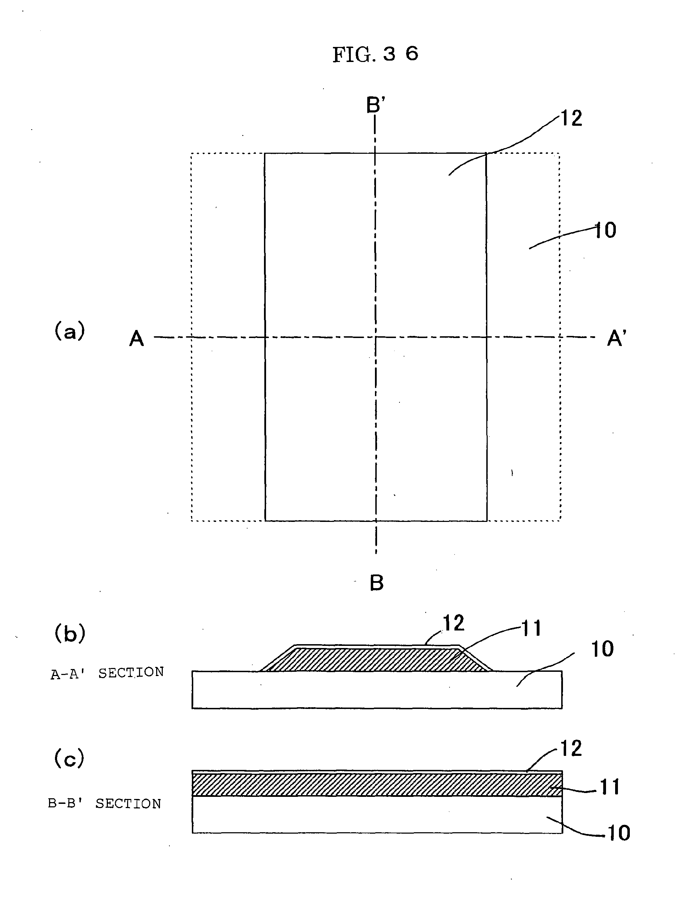

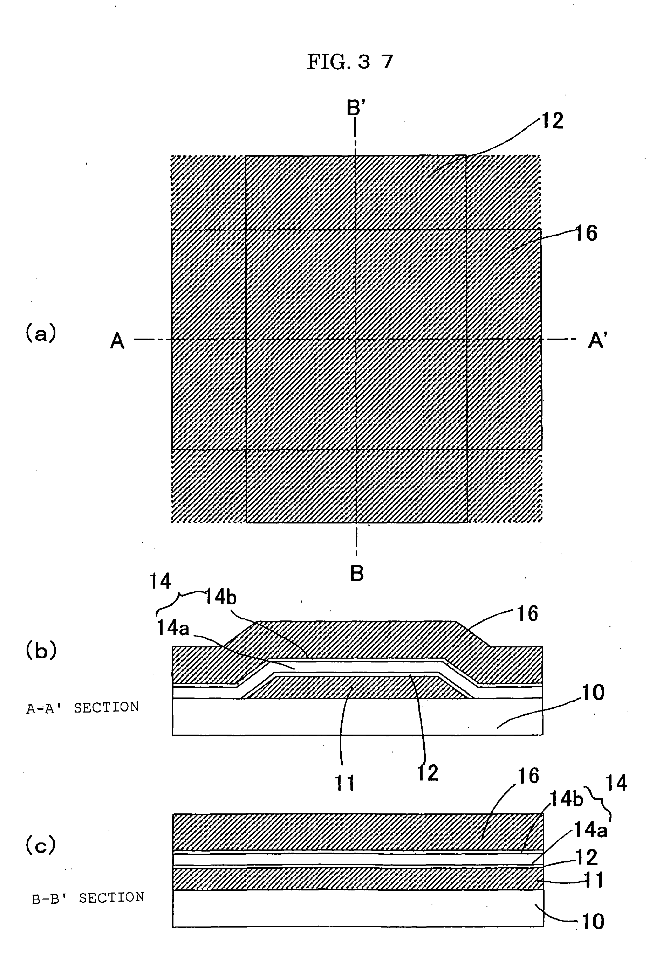

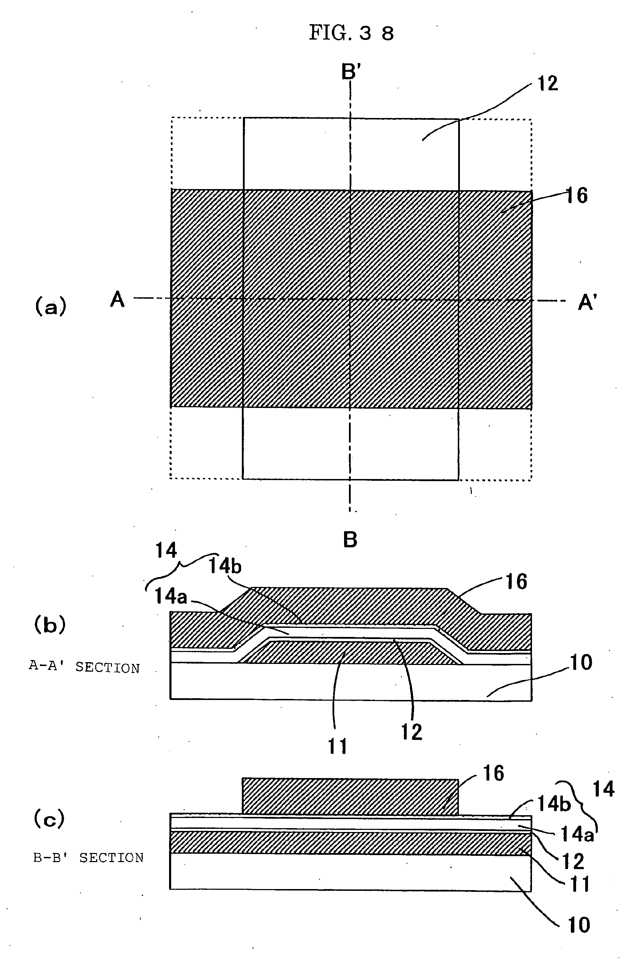

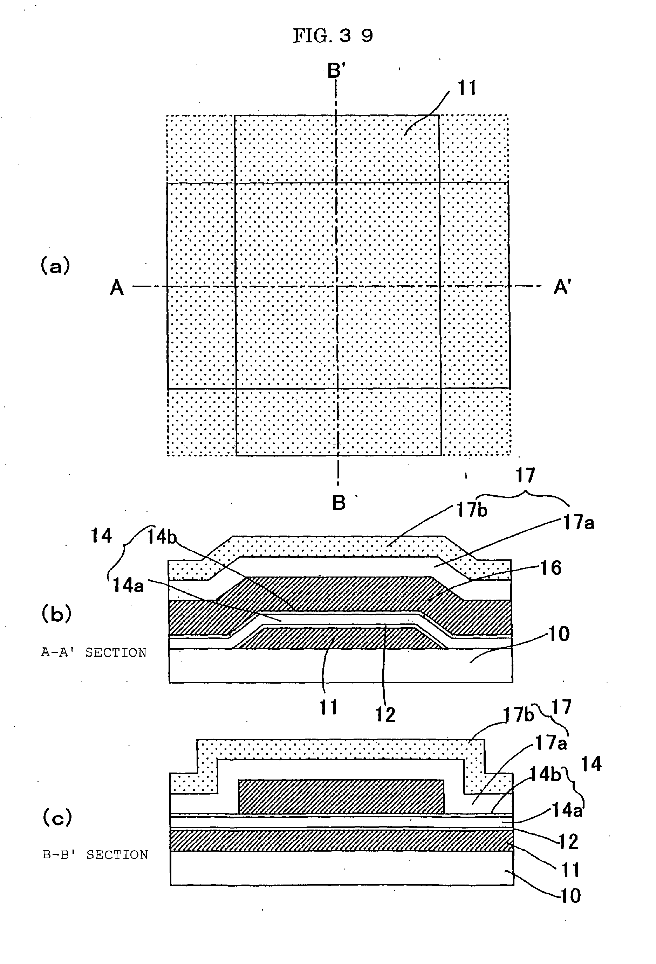

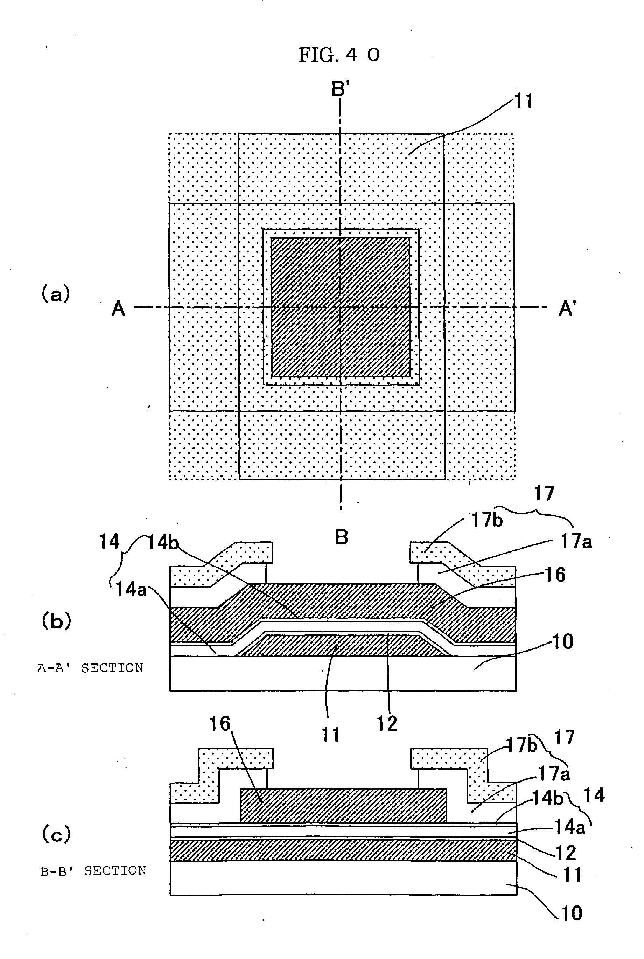

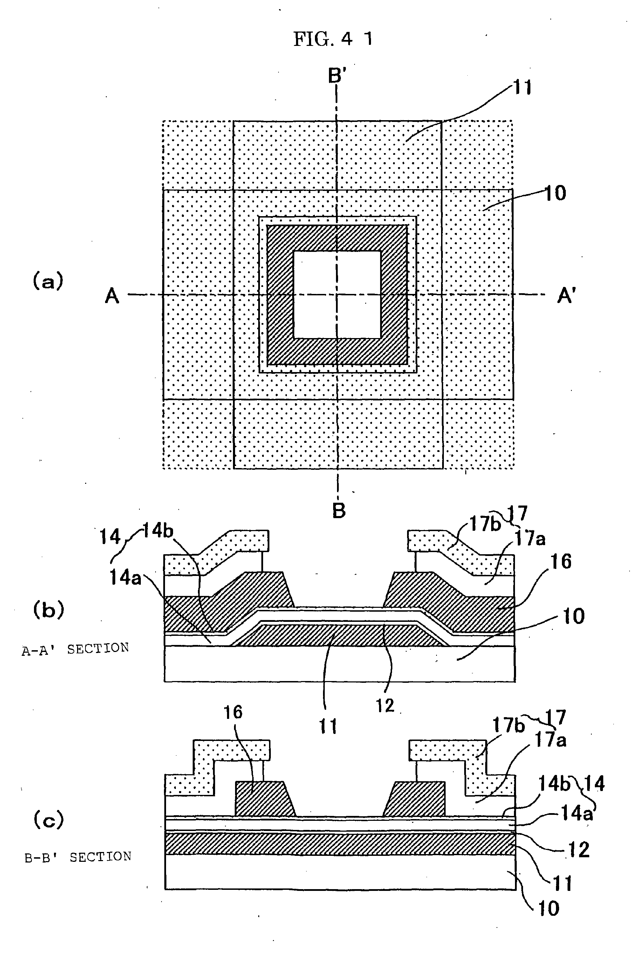

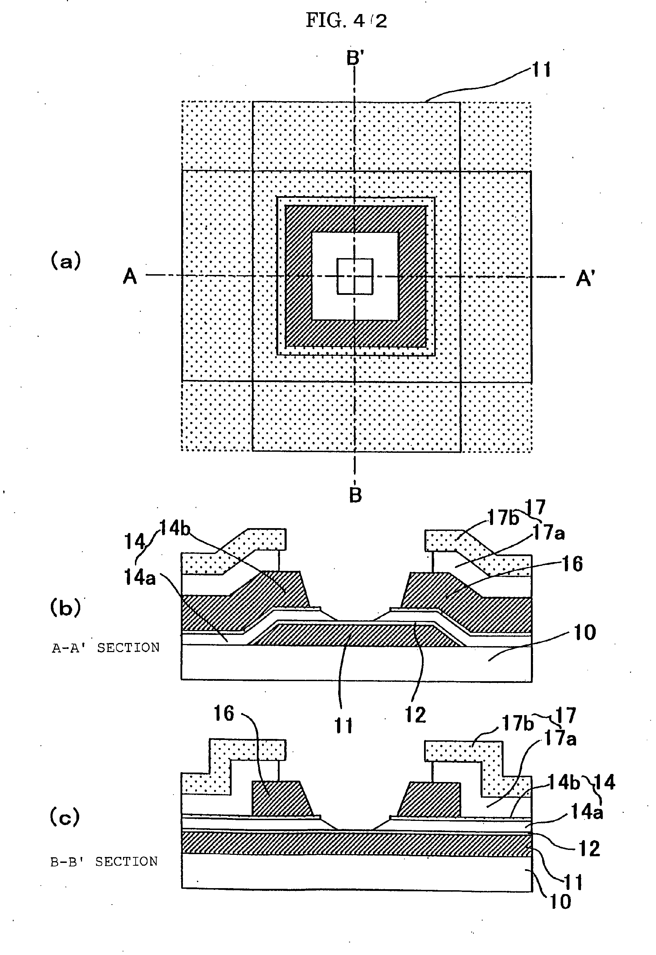

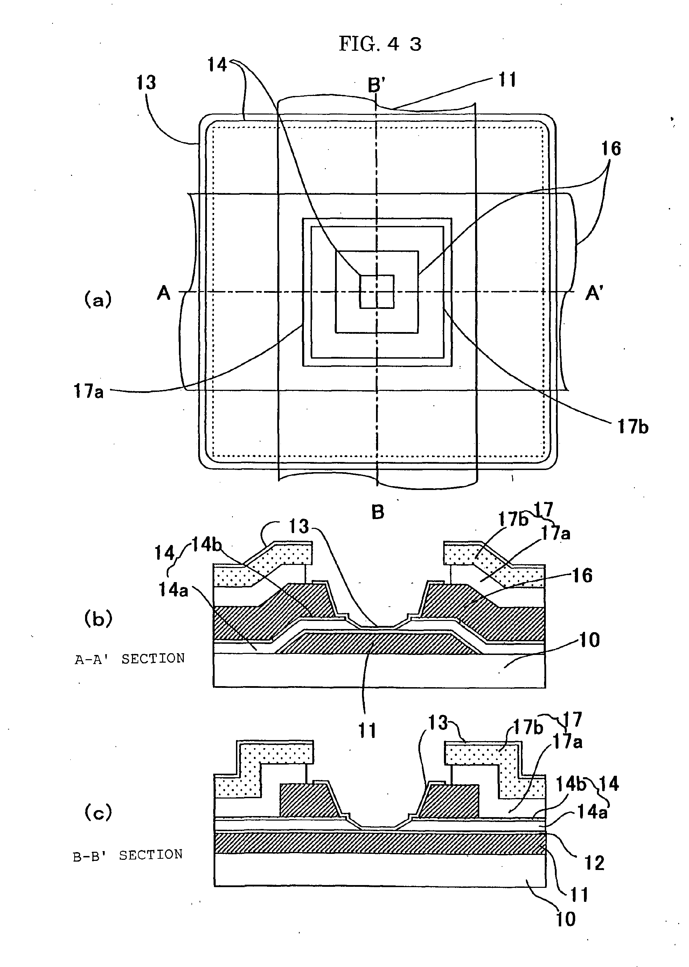

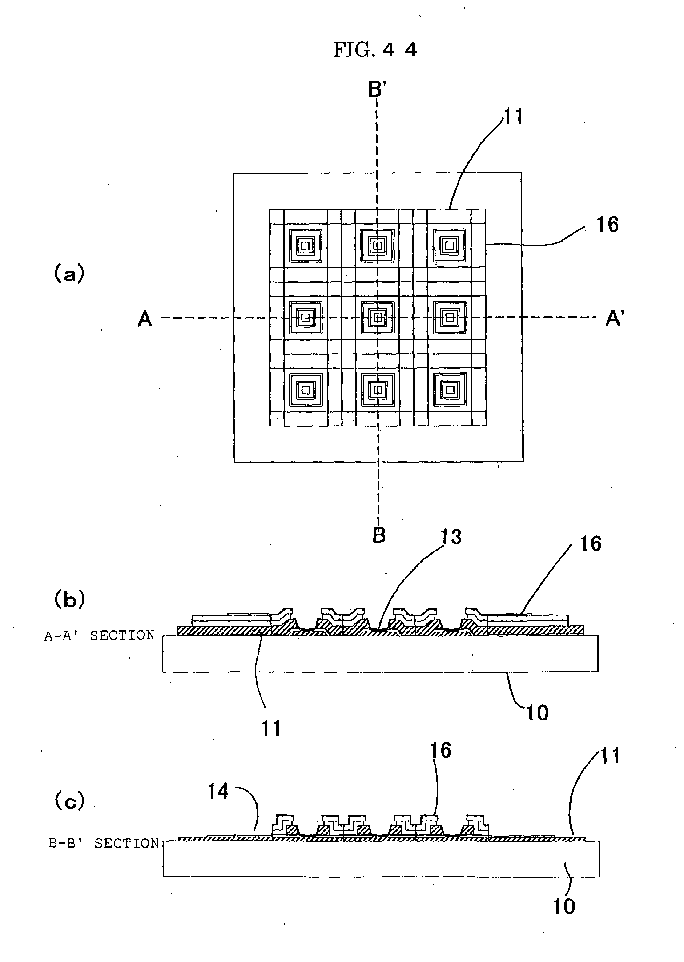

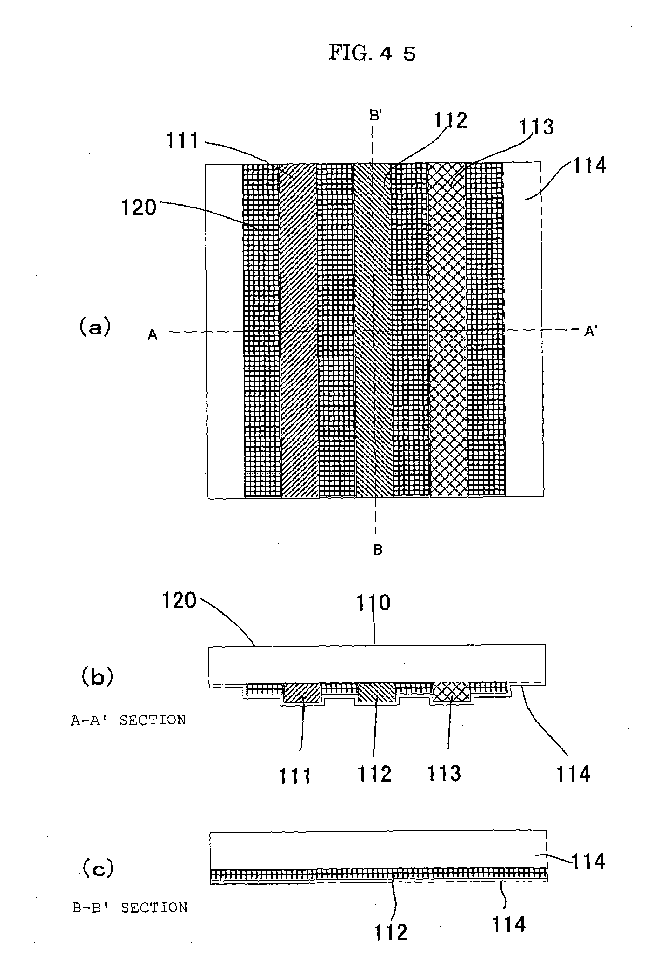

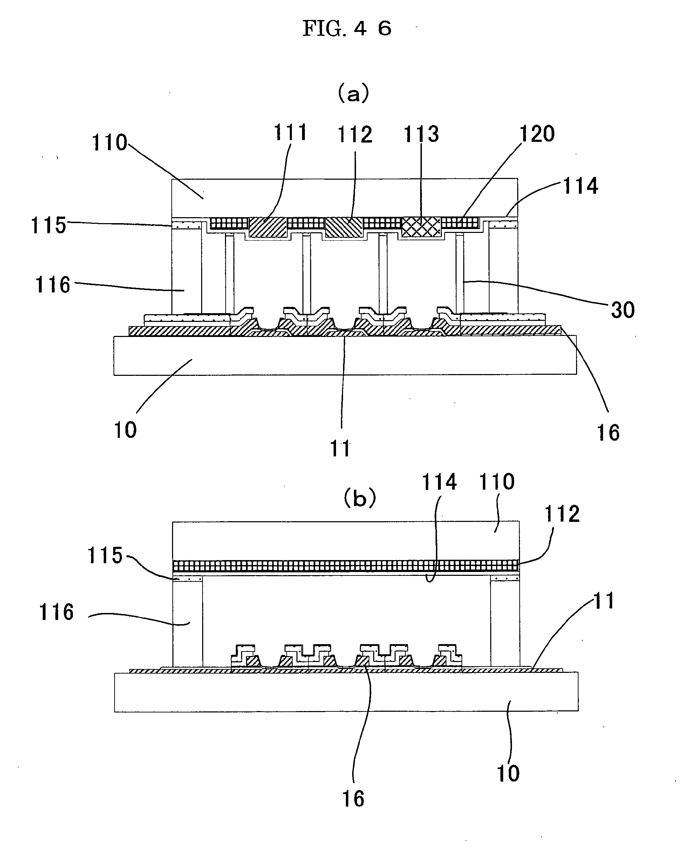

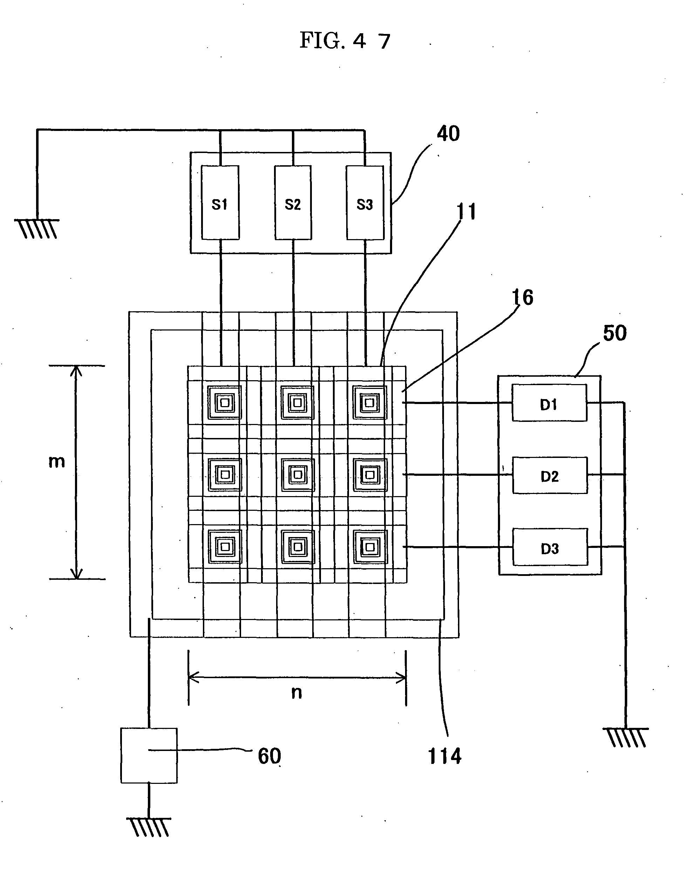

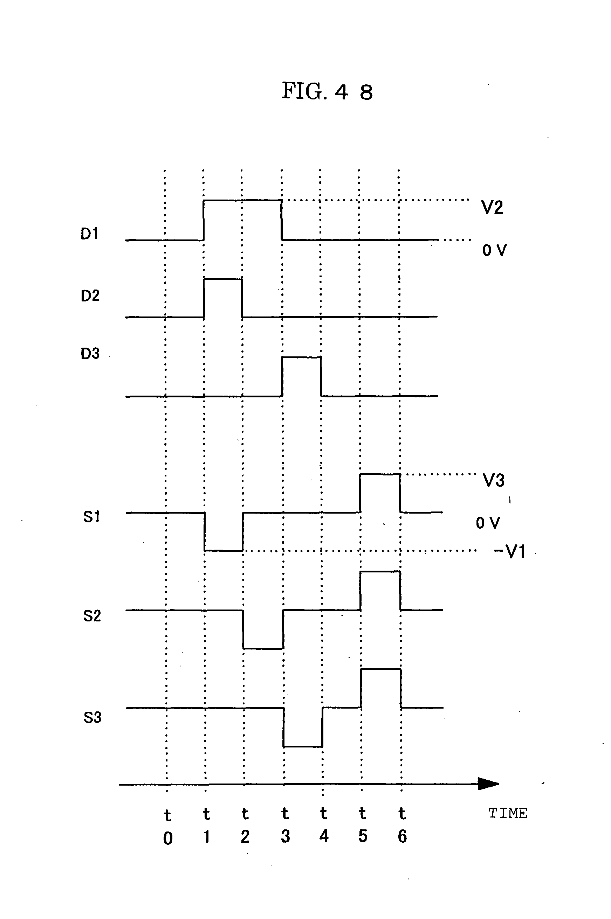

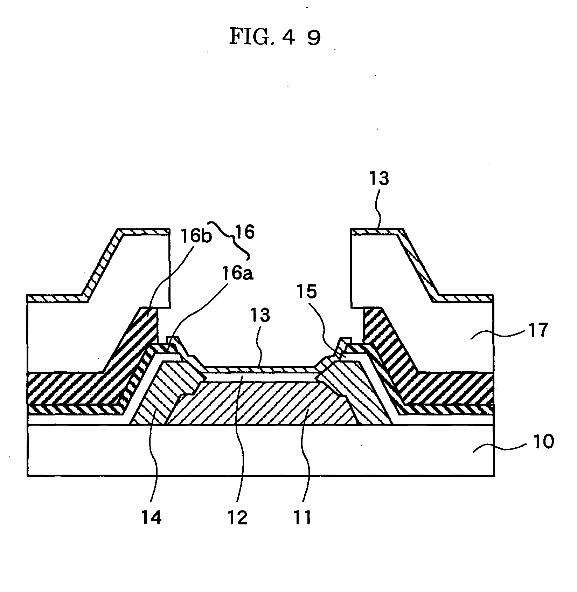

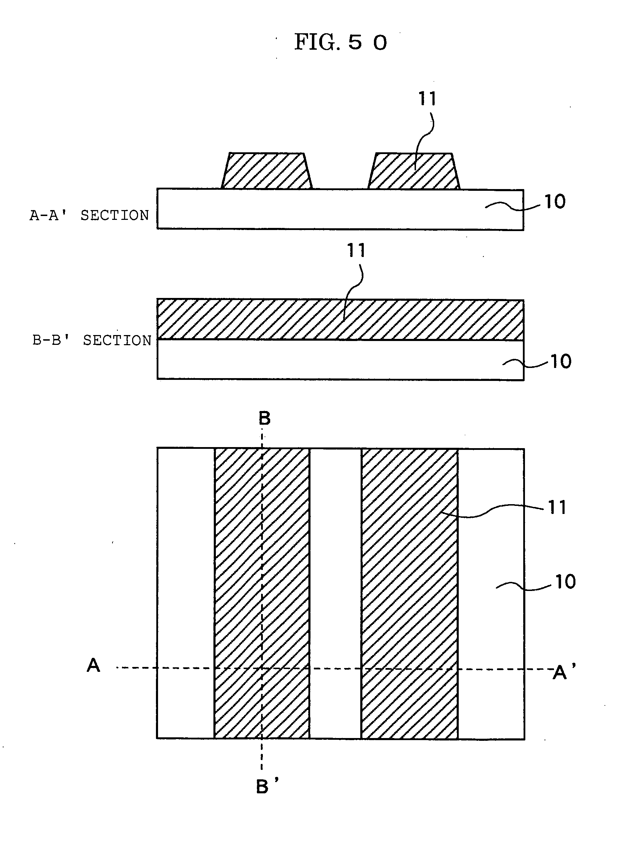

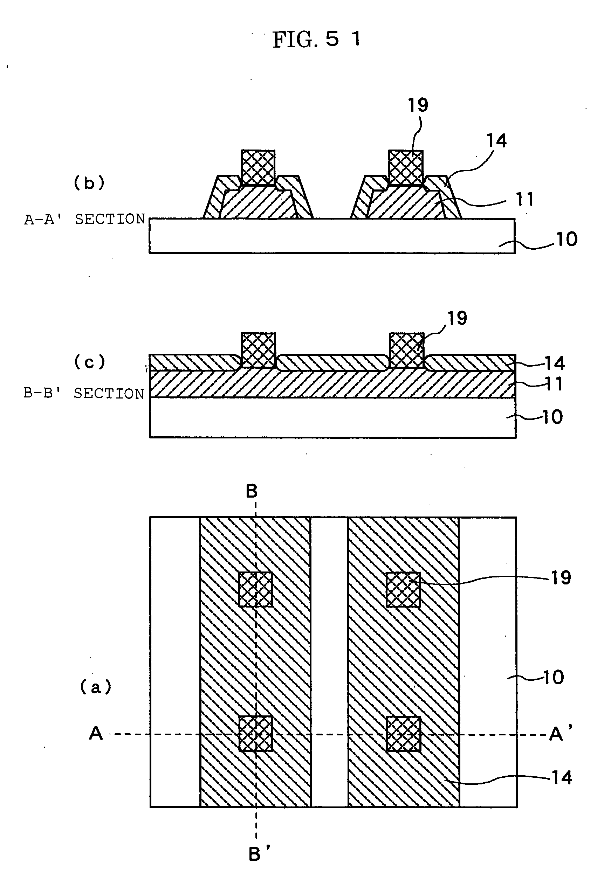

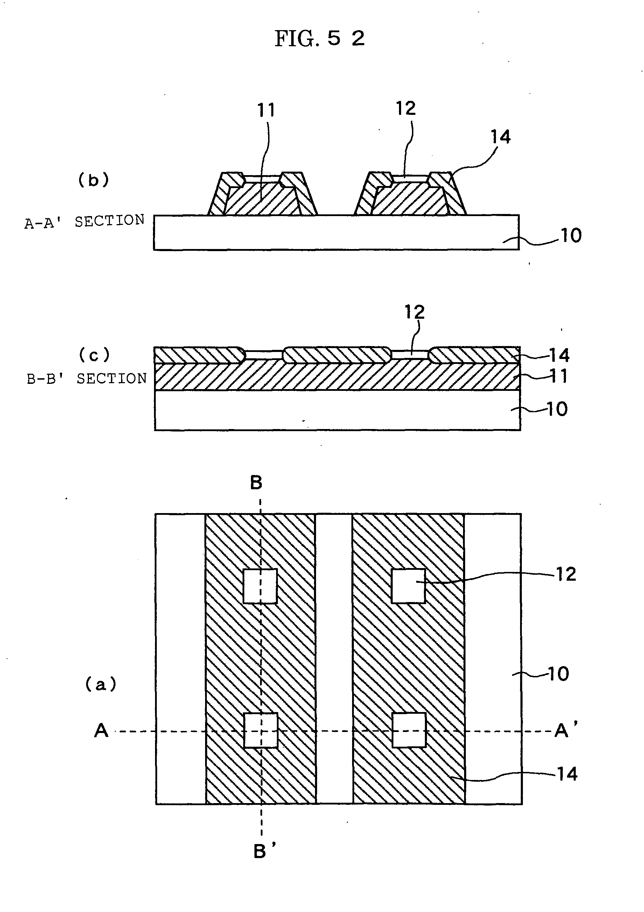

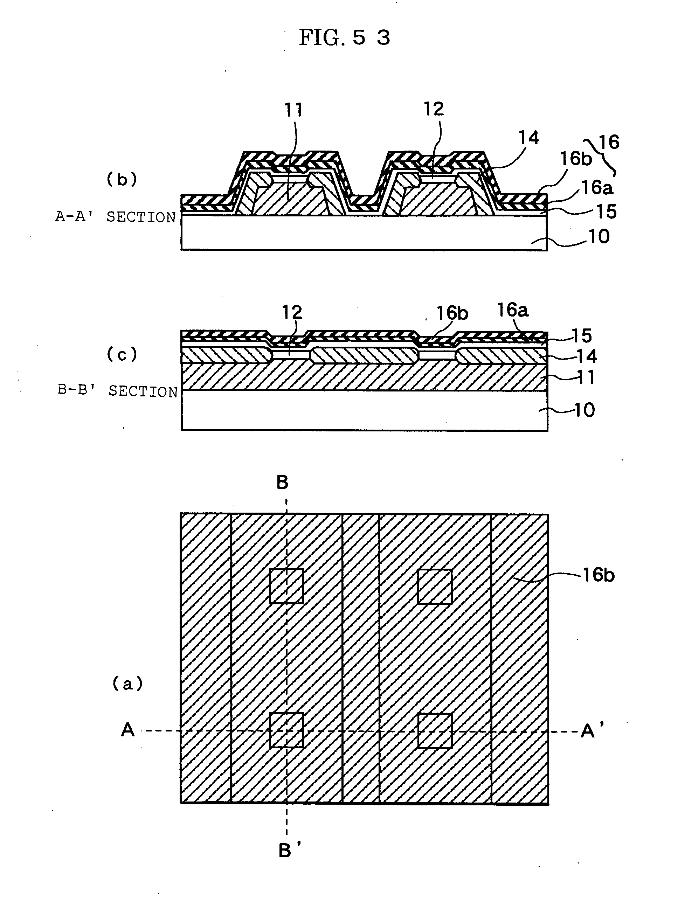

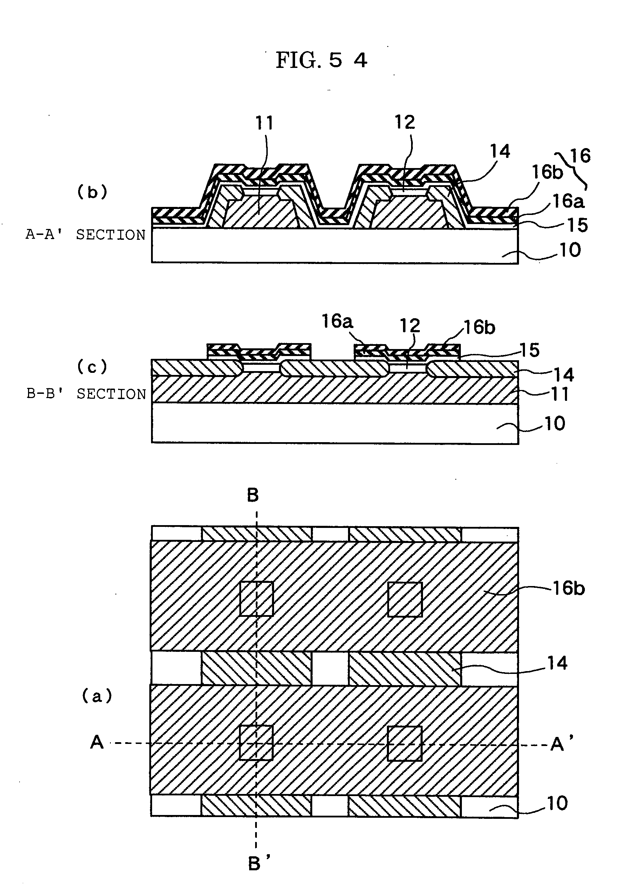

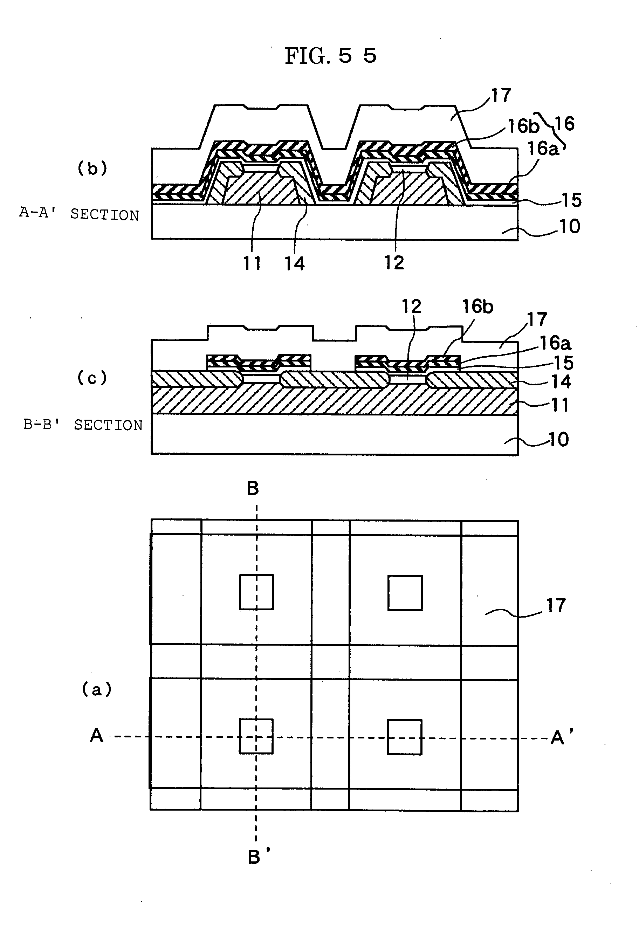

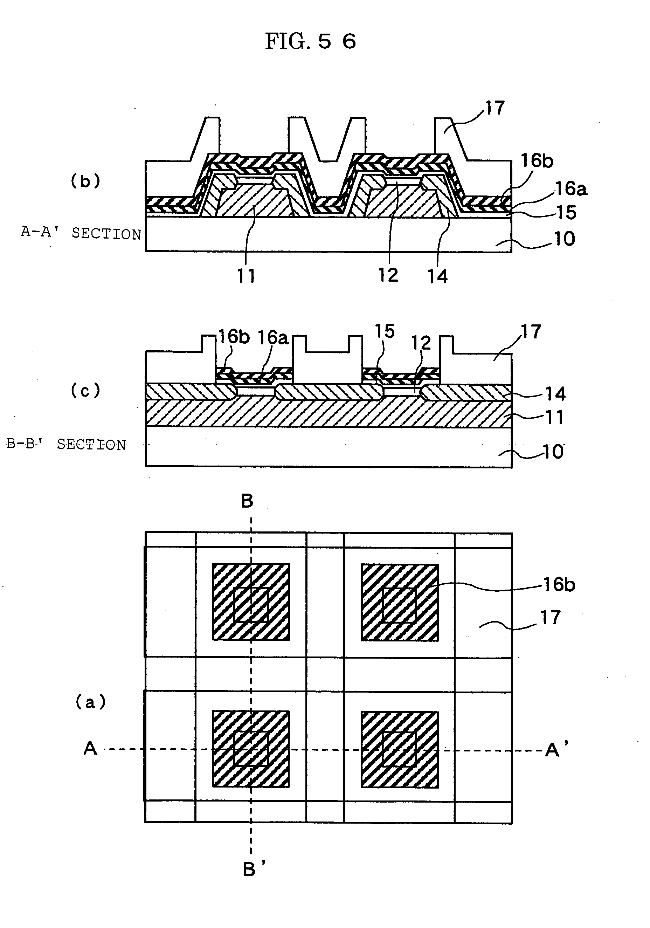

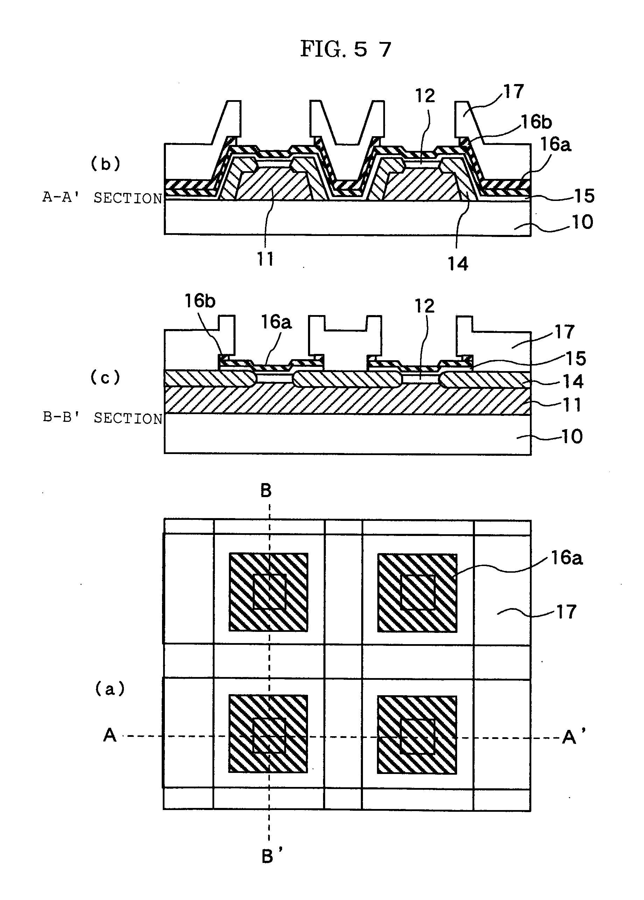

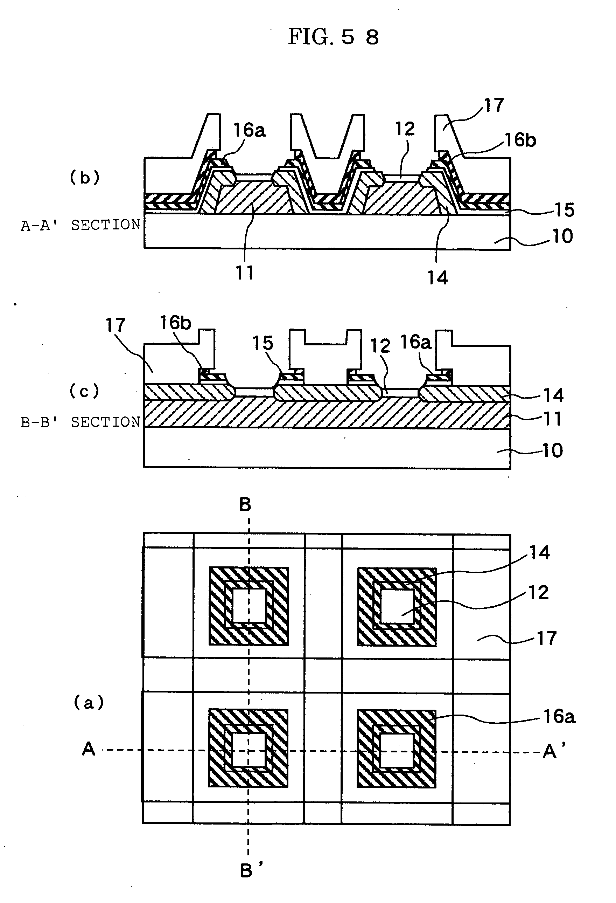

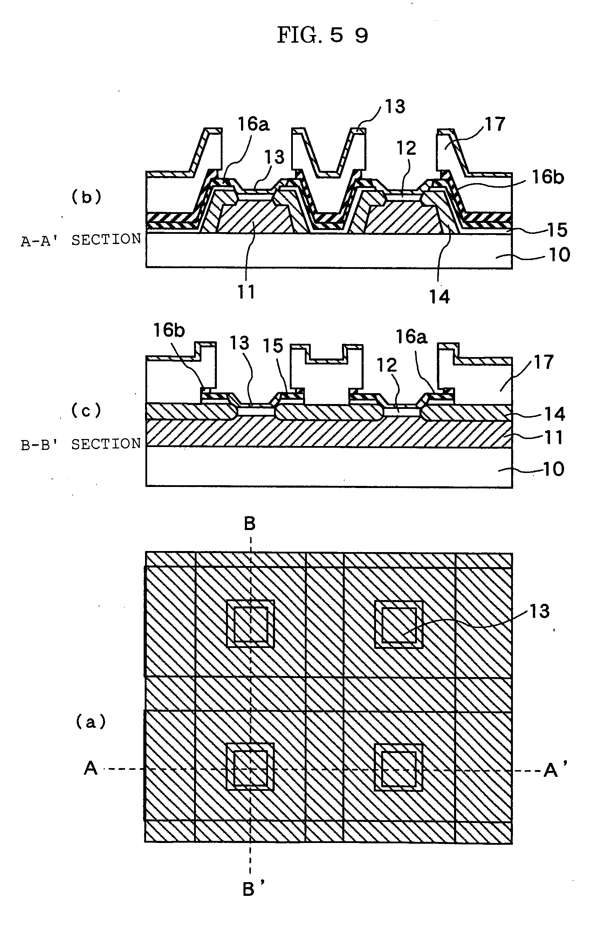

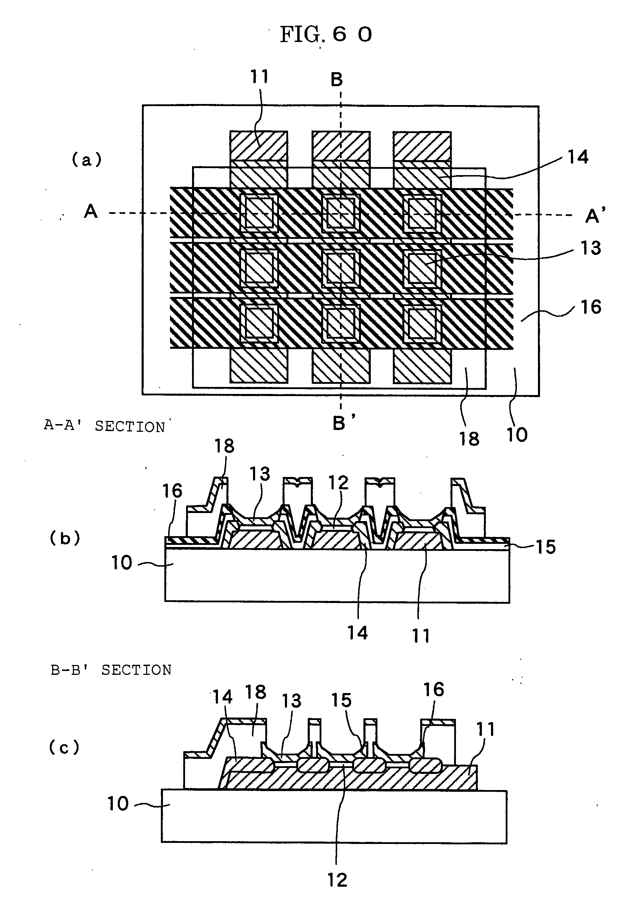

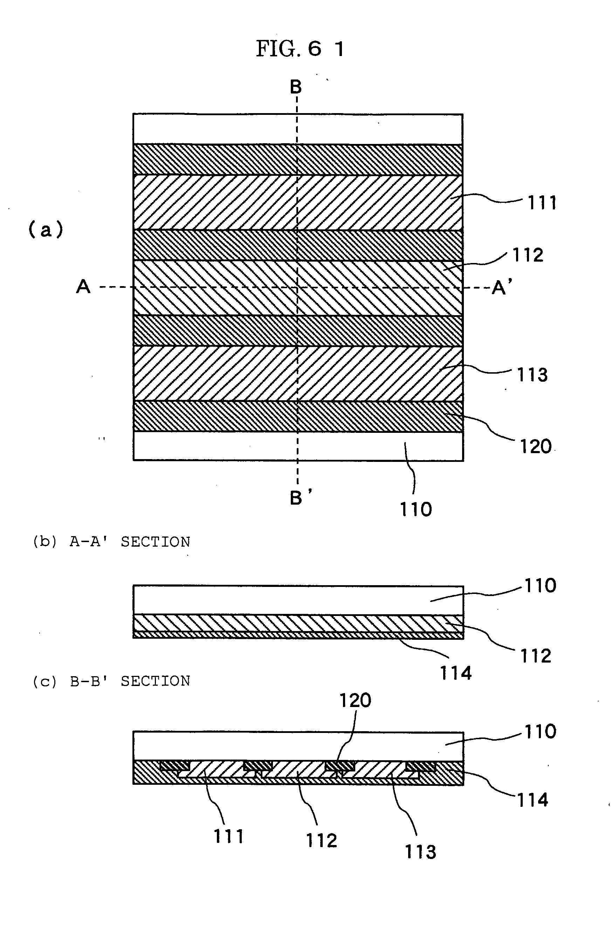

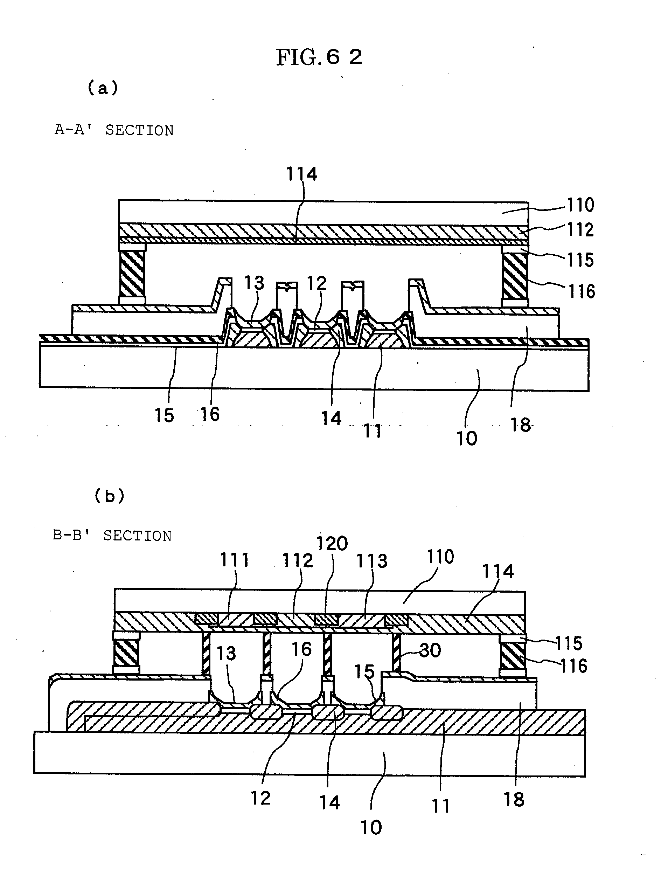

Fig. 1 is a diagram showing the principle of operation of a thin-film type electron source; Fig. 2 is a schematic sectional view for explaining an elemental structure of a thin-film type electron source in the background art; Fig. 3 is a schematic sectional view of an element of a thin-film type electron source according to a first embodiment of a cold cathode type flat panel display according to the present invention; Fig. 4 is a schematic view for explaining a manufacturing process of the thin-film type electron source according to the first embodiment of the present invention; Fig. 5 is a schematic view following Fig. 4 for explaining the manufacturing process of the thin-film type electron source according to the first embodiment of the present invention; Fig. 6 is a schematic view following Fig. 5 for explaining the manufacturing process of the thin-film type electron source according to the first embodiment of the present invention; Fig. 7 is a schematic view following Fig. 6 for explaining the manufacturing process of the thin-film type electron source according to the first embodiment of the present invention; Fig. 8 is a schematic view following Fig. 7 for explaining the manufacturing process of the thin-film type electron source according to the first embodiment of the present invention; Fig. 9 is a schematic view following Fig. 8 for explaining the manufacturing process of the thin-film type electron source according to the first embodiment of the present invention; Fig. 10 is a schematic view following Fig. 9 for explaining the manufacturing process of the thin-film type electron source according to the first embodiment of the present invention; Fig. 11 is a schematic view following Fig. 10 for explaining the manufacturing process of the thin-film type electron source according to the first embodiment of the present invention; Fig. 12 is a schematic view following Fig. 11 for explaining the manufacturing process of the thin-film type electron source according to the first embodiment of the present invention; Fig. 13 is a schematic view following Fig. 12 for explaining the manufacturing process of the thin-film type electron source according to the first embodiment of the present invention; Fig. 14 is an explanatory diagram for comparing the characteristic of reanodization in the case of use of the structure according to the first embodiment of the present invention with that in the case of use of the structure in the background art; Fig. 15 is a schematic sectional view of an element of a thin-film type electron source according to a second embodiment of the cold cathode type flat panel display according to the present invention; Fig. 16 is a schematic view for explaining a manufacturing process of the thin-film type electron source according to the second embodiment of the present invention; Fig. 17 is a schematic view following Fig. 16 for explaining the manufacturing process of the thin-film type electron source according to the second embodiment of the present invention; Fig. 18 is a schematic view following Fig. 17 for explaining the manufacturing process of the thin-film type electron source according to the second embodiment of the present invention; Fig. 19 is a schematic view following Fig. 18 for explaining the manufacturing process of the thin-film type electron source according to the second embodiment of the present invention; Fig. 20 is a schematic view following Fig. 19 for explaining the manufacturing process of the thin-film type electron source according to the second embodiment of the present invention; Fig. 21 is a schematic view following Fig. 20 for explaining the manufacturing process of the thin-film type electron source according to the second embodiment of the present invention; Fig. 22 is a schematic view following Fig. 21 for explaining the manufacturing process of the thin-film type electron source according to the second embodiment of the present invention; Fig. 23 is a schematic view following Fig. 22 for explaining the manufacturing process of the thin-film type electron source according to the second embodiment of the present invention; Fig. 24 is a schematic view following Fig. 23 for explaining the manufacturing process of the thin-film type electron source according to the second embodiment of the present invention; Fig. 25 is a schematic view following Fig. 24 for explaining the manufacturing process of the thin-film type electron source according to the second embodiment of the present invention; Fig. 26 is an explanatory diagram for comparing the operation life characteristic in the case of use of the structure according to the second embodiment of the present invention with that in the case of use of the structure according to the first embodiment; Fig. 27 is a schematic view for explaining a manufacturing process of a thin-film type electron source according to a third embodiment of the present invention; Fig. 28 is a schematic view following Fig. 27 for explaining the manufacturing process of the thin-film type electron source according to the third embodiment of the present invention; Fig. 29 is a schematic view following Fig. 28 for explaining the manufacturing process of the thin-film type electron source according to the third embodiment of the present invention; Fig. 30 is a schematic view following Fig. 29 for explaining the manufacturing process of the thin-film type electron source according to the third embodiment of the present invention; Fig. 31 is a schematic view following Fig. 30 for explaining the manufacturing process of the thin-film type electron source according to the third embodiment of the present invention; Fig. 32 is a schematic view following Fig. 31 for explaining the manufacturing process of the thin-film type electron source according to the third embodiment of the present invention; Fig. 33 is a schematic view following Fig. 32 for explaining the manufacturing process of the thin-film type electron source according to the third embodiment of the present invention; Fig. 34 is a schematic view following Fig. 33 for explaining the manufacturing process of the thin-film type electron source according to the third embodiment of the present invention; Fig. 35 is a schematic view for explaining a manufacturing process of a thin-film type electron source according to a fourth embodiment of the present invention; Fig. 36 is a schematic view following Fig. 35 for explaining the manufacturing process of the thin-film type electron source according to the fourth embodiment of the present invention; Fig. 37 is a schematic view following Fig. 36 for explaining the manufacturing process of the thin-film type electron source according to the fourth embodiment of the present invention; Fig. 38 is a schematic view following Fig. 37 for explaining the manufacturing process of the thin-film type electron source according to the fourth embodiment of the present invention; Fig. 39 is a schematic view following Fig. 38 for explaining the manufacturing process of the thin-film type electron source according to the fourth embodiment of the present invention; Fig. 40 is a schematic view following Fig. 39 for explaining the manufacturing process of the thin-film type electron source according to the fourth embodiment of the present invention; Fig. 41 is a schematic view following Fig. 40 for explaining the manufacturing process of the thin-film type electron source according to the fourth embodiment of the present invention; Fig. 42 is a schematic view following Fig. 41 for explaining the manufacturing process of the thin-film type electron source according to the fourth embodiment of the present invention; Fig. 43 is a schematic view following Fig. 42 for explaining the manufacturing process of the thin-film type electron source according to the fourth embodiment of the present invention; Fig. 44 is a schematic view for explaining the structure of an electron source substrate of the cold cathode type flat panel display using the thin-film type electron source according to the second embodiment of the present invention; Fig. 45 is a schematic view for explaining an example of a fluorescent screen substrate forming the cold cathode type flat panel display according to the present invention; Fig. 46 is a schematic sectional view corresponding to a section taken on line A-A' and a section taken on line B-B' in Fig. 45, for explaining the configuration of the cold cathode type flat panel display in which the electron source substrate shown in Fig. 44 and the fluorescent screen substrate shown in Fig. 45 have been attached to each other; Fig. 47 is a circuit connection diagram for explaining a driving system of the cold cathode type flat panel display according to the present invention; Fig. 48 is a driving voltage waveform chart in the driving system shown in Fig. 47; Fig. 49 is a main portion sectional view for schematically explaining an electron emission portion of an electron source substrate for explaining a fifth embodiment of the cold cathode type flat panel display according to the present invention; Fig. 50 is a schematic view for explaining a manufacturing process of a thin-film type electron source according to the fifth embodiment of the present invention; Fig. 51 is a schematic view following Fig. 50 for explaining the manufacturing process of the thin-film type electron source according to the fifth embodiment of the present invention; Fig. 52 is a schematic view following Fig. 51 for explaining the manufacturing process of the thin-film type electron source according to the fifth embodiment of the present invention; Fig. 53 is a schematic view following Fig. 52 for explaining the manufacturing process of the thin-film type electron source according to the fifth embodiment of the present invention; Fig. 54 is a schematic view following Fig. 53 for explaining the manufacturing process of the thin-film type electron source according to the fifth embodiment of the present invention; Fig. 55 is a schematic view following Fig. 54 for explaining the manufacturing process of the thin-film type electron source according to the fifth embodiment of the present invention; Fig. 56 is a schematic view following Fig. 55 for explaining the manufacturing process of the thin-film type electron source according to the fifth embodiment of the present invention; Fig. 57 is a schematic view following Fig. 56 for explaining the manufacturing process of the thin-film type electron source according to the fifth embodiment of the present invention; Fig. 58 is a schematic view following Fig. 57 for explaining the manufacturing process of the thin-film type electron source according to the fifth embodiment of the present invention; Fig. 59 is a schematic view following Fig. 58 for explaining the manufacturing process of the thin-film type electron source according to the fifth embodiment of the present invention; Fig. 60 is a schematic explanatory view of the electron source substrate according to the fifth embodiment of the present invention; Fig. 61 is a schematic explanatory view of a fluorescent screen substrate to be combined with the electron source substrate shown in Fig. 60; and Fig. 62 is a sectional view for explaining the configuration of the cold cathode type flat panel display in which the electron source substrate shown in Fig. 60 and the fluorescent screen substrate shown in Fig. 61 have been attached to each other.

### [Best Modes for Carrying Out the Invention]

Embodiments of the present invention will be described below in detail with reference to the accompanying drawings. Fig. 3 is a main portion sectional view for schematically explaining an electron emission portion of an electron source substrate according to a first embodiment of the cold cathode type flat panel display according to the present invention. Figs. 4-14 are explanatory views of a manufacturing process of the electron source substrate shown in Fig. 3.

The electron emission portion of the electron source substrate according to this embodiment is comprised of an MIM type electron source element. In Fig. 3, the reference numeral 10 represents an insulation substrate preferably made of glass; 11, a lower electrode; 12, a tunnel insulation film; 13, an upper electrode; 14, a first interlayer insulation film; and 16, an upper electrode feeder wiring. In addition, the reference numeral 17 represents a surface protective layer; 17a, a surface protective film lower layer; and 17a, a surface protective film upper layer.

In the MIM type electron source element according to the embodiment, as shown in Fig. 3, the upper electrode 13 is electrically connected to a tapered terminal portion of the upper electrode feeder wiring 16. The manufacturing process of the MIM type electron source element having this structure will be described below with reference to Figs. 4-14 in turn.

First, as shown in Fig. 4, a metal film for the lower electrode 11 is formed on the insulating substrate 10 of glass or the like. As the material of this lower electrode 11, Al (aluminum) or an Al alloy is used. Here, an Al-Nd alloy doped with 2% by atomic weight of Nd (neodymium) is used.

For example, a sputtering method was used for forming this Al-Nd alloy film, and the film thickness was made 300 nm. After the film formation, the lower electrode 11 having a stripe shape as shown in Fig. 4 is formed by a photolithographic process and an etching process. As for the etching, wet etching, for example, using a mixed aqueous solution (PAN) of phosphoric acid, acetic acid and nitric acid as a treatment solution is applied.

Next, a method for forming the first interlayer insulation layer 14 and the tunnel insulation film 12 will be described with reference to Figs. 5 and 6. First, a portion which will be an electron emission portion on the lower electrode 11 is covered with a resist film 19, and the other portion is selectively anodized thickly and formed as the first interlayer insulation layer 14. When the chemical conversion voltage of this anodizing treatment is set at 100 V, the first interlayer insulation layer 14 is formed to be about 136 nm thick.

Next, the resist film 19 is removed, and the remaining surface of the lower electrode 11 is anodized. When the chemical conversion voltage in this event is set, for example, at 6 V, the tunnel insulation layer 12 is formed to be about 10 nm thick on the lower electrode 11 (see Fig. 6).

In Fig. 8, the upper electrode feeder wiring 16 and the second interlayer insulation layer 15 are formed. As the material of the upper electrode feeder wiring 16, Al or an Al alloy is preferably used. Particularly, an Al-Nd alloy doped with 2% by atomic weight of Nd is preferred. Here, the Al-Nd alloy was formed into a film 500 nm thick by a sputtering method. In this event, the temperature of the substrate 10 was set to be higher than the room temperature so as to increase the particle size of the Al alloy and make the resistivity thereof lower.

Particularly as the material of the second interlayer insulation layer 15, an insulation film material which can be selectively etched with respect to Al or an anodic oxide film thereof is desired. For example, an insulation film material such as Si oxide or Si nitride which can be dry-etched with CF₄ is preferred. In a dry etching method using fluoride-based etching gas such as CF₄ or the like, Si oxide or Si nitride can be etched at a high selection ratio with respect to Al or an Al alloy of the lower electrode and the anodic oxide film thereof.

Here, Si oxide was used as the second interlayer insulation layer 15, and the film thickness thereof was set to be thick (40 nm with withstand voltage about 40V in this embodiment) enough not to cause insulation breakdown due to the driving voltage Vd (5-10 V in this embodiment) of the thin-film type electron source or the chemical conversion voltage VA (6 V in this embodiment) of the tunnel insulation layer 12.

Next, as shown in Fig. 8, the upper electrode feeder wiring 16 is processed like a stripe in a direction perpendicular to the lower electrode 11 by a photolithographic process and an etching process. As for the wet etching, for example, a mixed aqueous solution (PAN) of phosphoricacid, aceticacid and nitric acid is used as a treatment solution. In this event, the second interlayer insulation layer 15 plays a role of an etching stopper. Therefore, damage to the first interlayer insulation layer 14 due to the wet etching solution is negligible.

In Fig. 9, the surface protective film 17 is formed. The surface protective film 17 is comprised of the surface protective film lower layer 17a and the surface protective film upper layer 17b. For example, a film generally used as an insulation film in semiconductor devices or the like is available as the surface protective film 17. That is, as the material of the surface protective film 17, SIO, SiO₂, glasses such as phosphor silica glass, borosilicate glass and the like, Si₃N₄, Al₂O₃, polyimide, etc. are available.

In addition, as a film formation method, a sputtering method, a vacuum deposition method, a chemical vapor deposition method, an application method, etc. are available. For example, the sputtering method or the chemical vapor deposition method may be used for forming a film of SiO₂, Al₂O₃, Si₃N₄, etc., the vacuum deposition method may be used for forming a film of SiO₂, and the application method or the like may be used for forming glasses such as phosphor silica glass, borosilicate glass and the like, or polyimide.

In this embodiment, a multilayer film comprised of Si₃N₄ for the surface protective film lower layer 17a and SiO₂ for the surface protective film upper layer 17b was used, and each layer was set to be 300 nm thick.

The surface protective film 17 serves to separate the upper electrode in each pixel from those in other pixels and to protect the electron source element from the atmospheric pressure applied to supports in the stage where the panel has been completed.

In Fig. 10, in order to open an electron emission portion, a part of the surface protective film 17 is opened by photolithography and dry etching. Mixed gas of CF₄ and O₂ is preferable as dry etching gas. In a dry etching method using fluoride-based etching gas such as CF₄ or the like, an SiO₂ film or an Si₃N₄ film of the surface protective film 17 is etched at a high selection ratio with respect to the Al alloy of the upper electrode feeder wiring 16. Accordingly, only the surface protective film 17 can be processed using the upper electrode feeder wiring 16 as a stopper film.

In addition thereto, in this embodiment, the two films (the surface protective film lower layer 17a and the surface protective film upper layer 17b) forming the surface protective film 17 are etched at different rates from each other. Accordingly, the interlayer insulation film lower layer 17a suffers larger side etching so that the surface protective film lower layer 17a is set back more widely than the surface protective film upper layer 17b. Thus, an "appentice" structure is formed in this portion.

In Fig. 11, a resist pattern is provided by photolithography, and the upper electrode feeder wiring 16 in the electron emission portion is removed using the aforementionedmixedaqueous solution (PAN) of phosphoric acid, acetic acid and nitric acid. In this event, in order to make an electric connection with the upper electrode 13 which would be built later in the electron emission portion, the resist curing temperature was made lower than usual so that the adhesion force was reduced to allow etching to make progress with peeling.

As a result, a normal dip shape, that is, an extremely gentle taper (whose taper angle was not larger than 10 degrees) was provided in a terminal portion of the upper electrode feeder wiring 16.

In Fig. 12, SiO₂ of the second interlayer insulation layer 15 is removed by a photolithographic process and a dry etching process usingmixed gas of CF₄ and O₂, so that the electron emission portion is opened to surround the tunnel insulation film 12.

In a dry etching method using fluoride-based etching gas such as CF₄ or the like, SiO₂ of the second interlayer insulation layer 15 is etched at a high selection ratio with respect to the tunnel insulation film 12 and the first interlayer insulation layer 14 each comprised of an anodic oxide film of an Al alloy. Therefore, damage to the tunnel insulation film 12 can be reduced.

In addition, in this event, the etching conditions were adjusted so that the resist mask was etched at a higher rate than SiO₂ of the second interlayer insulation layer 15. Thus, a gentle dip shape was given to the terminal portion. As a result, a failure in coating of the upper electrode in this portion could be prevented. The exposed tunnel insulation film 12 is anodized again so that the damage caused by processing is repaired.

Finally, as shown in Fig. 13, the upper electrode film 13 is formed. Thus, the electron source substrate is completed. The upper electrode film 13 is formed by sputtering. As the upper electrodes 13, for example, a laminate of Ir, Pt and Au films is used, and each film is set to be several nanometers thick. In this event, the upper electrodes 13 are separated pixel by pixel due to a failure in coating in the aforementioned "appentice" portion. Thus, incidental contamination or processing damage to the upper electrodes or the tunnel insulation film 12 due to photolithography or the like can be avoided.

The effect of this embodiment can be confirmed directly by image display. In addition, the effect can be confirmed by checking the above-mentioned reanodization characteristic.

Fig. 14 is an explanatory diagram for comparing the characteristic of reanodization in the case of use of the structure according to the first embodiment of the present invention with that in the case of use of the structure in the background art. (a) of Fig. 14 shows the chemical conversion current characteristic of reanodization in the structure according to the first embodiment of the present invention in the state where a constant voltage of a chemical conversion voltage VA=6V is applied thereto. (b) of Fig. 14 shows the chemical conversion current characteristic of reanodization in the background-art structure having no second interlayer insulation layer 15.

As shown in (a) of Fig. 14, in the background-art structure having no second interlayer insulation layer 15, insulation breakdown often occurs in the first interlayer insulation layer 14 during oxidation, and increase in chemical conversion current is observed. On the other hand, in the structure according to this embodiment having the second interlayer insulation layer 15, as shown in (a) of Fig. 14, the chemical conversion current decreases monotonously with progress of oxidation. This shows that even when there is a defect in the first interlayer insulation layer 14, the second interlayer insulation layer 15 protects the defect and secures sufficient insulation tolerance with respect to the chemical conversion voltage VA. This is because a chance for a defect in the second interlayer insulation layer 15 to overlap a defective position of the first interlayer insulation layer 14 is extremely rare.

Incidentally, in this embodiment, the tunnel insulation film 12 is formed by anodization in advance before the upper electrode feeder wiring 16 is formed. After the upper electrode feeder wiring 16 etc. are processed, damage to the tunnel insulation film 12 is repaired by reoxidization thereof. Alternatively, the tunnel insulation layer 12 may be anodized only after the upper electrode feeder wiring 16 etc. are processed. In this method, the tunnel insulation film 12 can be formed by only one-time oxidation. Therefore, the process can be shortened.

The electron source substrate having the structure according to this embodiment was attached to the fluorescent screen substrate so as to form a cold cathode type flat panel display. As a result, a cold cathode type flat panel display improved in reliability due to reduction in occurrence of pixel defects could be obtained.

Next, description will be made about a second embodiment of the present invention.

Fig. 15 is a main portion sectional view for schematically explaining an electron emission portion of an electron source substrate according to the second embodiment of the cold cathode type flat panel display according to the present invention. Figs. 16-25 are explanatory views of a manufacturing process of the electron source substrate shown in Fig. 15.

As shown in Fig. 15, the electron emission portion of the electron source substrate according to this embodiment is characterized in that an opening region of a second interlayer insulation layer 15 is provided on the inner side of a region of a tunnel insulation film 12. The other configuration is similar to the configuration described in Fig. 3.

A manufacturing method of the electron emission portion having a sectional structure shown in Fig. 15 will be described with reference to Figs. 16-25. The electron emission portion according to this embodiment has not only an effect of reducing an initial short-circuit defect between a lower electrode and an upper electrode feeder wiring due to a defect of an interlayer insulation film, but also an effect of improving the film quality of a tunnel insulation film 12 to thereby suppress time dependent insulation breakdown.

In Fig. 16, a metal film for a lower electrode 11 is formed on an insulating substrate 10 of glass or the like. As the material for forming the lower electrode 11, Al or an Al alloy is used. Here, an Al-Nd alloy doped with 2% by atomic weight of Nd was used. For example, a sputtering method was used for forming this film, and the filmthickness was made 300 nm. After the film formation, the lower electrode 11 having a stripe shape as shown in Fig. 3 is formed by a photolithographic process and an etching process. As for the etching, for example, wet etching using a mixed aqueous solutionofphosphoricacid, acetic acid and nitric acid is applied.

Next, a method for forming a protective insulation layer 14 and the tunnel insulation film 12 will be described with reference to Figs. 17 and 18. First, a portion which will be an electron emission portion on the lower electrode 11 is covered with a resist film 19, and the other portion is selectively anodized thickly and formed as the first interlayer insulation layer 14. When the chemical conversion voltage is set at 100 V, the first interlayer insulation layer 14 is formed to be about 136 nm thick.

Next, the resist film 19 is removed, and the remaining surface of the lower electrode 11 is anodized. When the chemical conversion voltage of this anodizing is set, for example, at 6 V, the tunnel insulation layer 12 is formed to be about 10 nm thick on the lower electrode 11. When nonaqueous chemical conversion solutions disclosed in JP-A-11-135316 are used as chemical conversion solutions to be used for this anodization, improvement in the film quality of the tunnel insulation film 12 can be expected.

The above-mentioned JP-A-11-135316 discloses that the tunnel insulation film anodized with these chemical conversion solutions has strength against time dependent insulation breakdown.

In Fig. 19, an upper electrode feeder wiring 16 and a second interlayer insulation layer 15 are formed. As the material of the upper electrode feeder wiring 16, Al or an Al alloy is preferably used. Particularly, an Al-Nd alloy doped with 2% by atomic weight of Nd is preferred. Here, the Al-Nd alloy was formed to be 500 nm thick by a sputtering method. In this event, the temperature of the substrate 10 was set to be higher than the room temperature so as to increase the particle size of the Al alloy and make the resistivity thereof lower.

Particularly as the material of the second interlayer insulation layer 15, an insulation film material which can be selectively etched with respect to Al or an anodic oxide film thereof is desired. For example, an insulation film material such as Si oxide or Si nitride which can be dry-etched with CF₄ is preferred.

In a dry etching method using fluoride-based etching gas such as CF₄ or the like, Si oxide or Si nitride can be etched at a high selection ratio with respect to Al or an Al alloy of the lower electrode and the anodic oxide film thereof.

Here, Si oxide was used as the second interlayer insulation layer 15, and the film thickness thereof was set to be thick (40 nm with withstand voltage about 40V in this embodiment) enough not to cause insulation breakdown due to the driving voltage Vd (5-10 V in this embodiment) of the thin-film type electron source or the chemical conversion voltage VA (6 V in this embodiment) of the insulation layer 12.

In Fig. 20, the upper electrode feeder wiring 16 is processed like a stripe in a direction perpendicular to the lower electrode 11 by a photolithographic process and an etching process. For the wet etching, for example, a mixed aqueous solution (PAN) of phosphoric acid, acetic acid and nitric acid is used. In this event, the second interlayer insulation layer 15 plays a role of an etching stopper. Therefore, damage to the first interlayer insulation layer 14 due to the aforementioned wet etching solution is negligible.

In Fig. 21, a surface protective film 17 is formed. The surface protective film 17 is comprised of a surface protective film lower layer 17a and a surface protective film upper layer 17b. For example, a film generally used as an insulation film in semiconductor devices or the like is available as the surface protective film 17. That is, as the material of the surface protective film 17, SiO, SiO₂, glasses such as phosphor silica glass, borosilicate glass and the like, Si₃N₄, Al₂O₃, polyimide, etc. are available. In addition, as a film formation method, a sputtering method, a vacuum deposition method, a chemical vapor deposition method, an application method, etc. are available.

For example, the sputtering method or the chemical vapor deposition method may be used for forming a film of SiO₂, Al₂O₃, Si₃N₄, etc., the vacuum deposition method may be used for forming a film of SiO₂, and the application method or the like may be used for forming glasses such as phosphor silica glass, borosilicate glass and the like, or polyimide. In this embodiment, a multilayer film comprised of Si₃N₄ for the surface protective film lower layer 17a and SiO₂ for the surface protective film upper layer 17b was used, and each layer was set to be 300 nm thick.

This surface protective film 17 serves to separate the upper electrode 11 in each pixel from those in other pixels and to protect the electron source element from the atmospheric pressure applied to supports defining the distance with which the electron source substrate and the fluorescent screen substrate are attached to each other, in the stage where the panel display has been completed.

In Fig. 22, in order to open an electron emission portion, a part of the surface protective film 17 is opened by photolithography and dry etching. Mixed gas of CF₄ and O₂ is preferable as dry etching gas. In a dry etching method using fluoride-based etching gas such as CF₄ or the like, an SiO₂ film or an Si₃N₄ film of the surface protective film 17 is etched at a high selection ratio with respect to the Al alloy of the upper electrode feeder wiring 16. Accordingly, only the surface protective film 17 can be processed using the upper electrode feeder wiring 16 as a stopper film. In addition thereto, in this embodiment, the two films (the surface protective film lower layer 17a and the surface protective film upper layer 17b) forming the surface protective film 17 are etched at different rates from each other. Accordingly, the interlayer insulation film lower layer 17a suffers larger side etching so that the surface protective film lower layer 17a is set back more widely than the surface protective film upper layer 17b. Thus, an "appentice" structure is formed in this portion.

In Fig. 23, a resist pattern is provided by photolithography, and the upper electrode feeder wiring 16 in the electron emission portion is removed using the aforementioned mixed aqueous solution (PAN) of phosphoric acid, acetic acid and nitric acid. In this event, in order to make an electric connection with the upper electrode 13 which would be built later in the electron emission portion, the resist curing temperature was made lower than usual so that the adhesion force was reduced to allow etching to make progress with peeling. As a result, a normal dip shape, that is, an extremely gentle taper (whose taper angle was not larger than 10 degrees) was provided in a terminal portion of the upper electrode feeder wiring 16.

In Fig. 24, SiO₂ of the second interlayer insulation layer 15 is dry-etched by a photolithographic process and a dry etching process usingmixedgas of CF₄ and O₂, so that the electron emission portion is opened to surround the tunnel insulation film 12. In a dry etching method using fluoride-based etching gas such as CF₄ or the like, SiO₂ of the second interlayer insulation layer 15 is etched at a high selection ratio with respect to the tunnel insulation film 12 and the first interlayer insulation layer 14 each comprised of an anodic oxide film of an Al alloy. Therefore, damage to the tunnel insulation film 12 can be reduced.

In addition, in this event, the etching conditions were adjusted so that the resist mask was etched at a higher rate than SiO₂ of the second interlayer insulation layer 15. Thus, a gentle dip shape was given to the terminal portion. As a result, disconnection caused by a failure in coating of the upper electrode in this portion could be prevented. The exposed tunnel insulation film 12 is anodized again so that the damage caused by processing is repaired.

Finally, as shown in Fig. 25, the upper electrode film 13 is formed. Thus, the electron source substrate is completed. The upper electrode film 13 is formed by sputtering. As the upper electrodes 13, for example, a laminate of Ir, Pt and Au films is used, and each film is set to be several nanometers thick. In this event, the upper electrodes 13 are separated pixel by pixel due to a failure in coating in the aforementioned "appentice" portion. Thus, incidental contamination or processing damage to the upper electrode film 13 or the tunnel insulation film 12 due to photolithography or the like can be avoided.

Fig. 26 is an explanatory diagram for comparing the operation life characteristic in the case of use of the structure according to the second embodiment of the present invention with that in the case of use of the structure according to the first embodiment. In Fig. 26, an increment of a diode voltage required for allowing a constant current to flow into a diode is measured and plotted with respect to the operating time.

In a tunnel diode, electrons injected into an insulation film suffer inelastic scattering when they are traveling in a conduction band. Thus, some electrons are captured in the insulation film. The captured electrons relieve an electric field in the insulation film so that the thickness of a barrier increases. As a result, electron injection is suppressed. Therefore, in order to keep a constant diode current, it is necessary to increase the applied voltage. Experiences of the present inventors have shown that there is a tendency to bring the insulation film into intrinsic breakdown when this voltage increment reaches 0.5 V.

In the case of the MIM type electron emission structure described in the first embodiment of the present invention, increase in diode voltage was 0.3V in 3, 000 hours, and there after insulation breakdown occurred in 10,000 hours. On the other hand, in the case of the structure according to the second embodiment of the present invention, increase in voltage was 0.2 Vat the time when 20, 000 hours had passed, and it was confirmed that there occurred no breakdown.

This reason has not yet been known exactly, but the present inventors conceive it as follows.

The difference between the first embodiment and the second embodiment is the system for setting an electron emission region. In the first embodiment, the border is formed by the first interlayer insulation layer. A technique of local oxidation using a resist pattern as a mask is used for making a non-oxidized region in the first interlayer insulation layer. In this case, oxidation is not restrained perfectly in the edge of the resist pattern.

In fact, oxidation progresses about 1 µm laterally inside the edge. Due to this lateral progress of oxidation, an intermediate region where the thickness of the oxide film continuously varies from zero (or natural oxide film) to 140 nm (100V oxide) is formed. When the process in this state enters the next step and the tunnel oxide film is formed by anodization, the portion having a thickness corresponding to 6V or lower in the intermediate region will suffer oxidation again. This so-called doubly-oxidized region exhibits an in-between characteristic of the tunnel oxide film and the interlayer insulation film. The region is estimated to include more trap levels or defects than a normal tunnel insulation film region. It can be considered that time dependent deterioration will appear conspicuously with respect to electron injection when the region is operated in the tunnel diode.

On the other hand, in the second embodiment, the above-mentioned intermediate region is covered with the second interlayer insulation layer. Therefore, the intermediate region does not contribute to the operation of the tunnel diode. This can be considered as the reason why the time dependent insulation breakdown mode can be suppressed.

The electron source substrate having the structure according to this embodiment was attached to the fluorescent screen substrate so as to form a cold cathode type flat panel display. As a result, a cold cathode type flat panel display improved in reliability due to reduction in occurrence of pixel defects could be obtained.

Next, a third embodiment of the present invention will be described in detail with reference to Figs. 27-33. This embodiment has a structure similar to that in the second embodiment in that the opening region of the second interlayer insulation layer 15 is provided inside the region of the tunnel insulation film 12. However, this embodiment is characterized in that a thin film electrode for connection is provided in place of a tapered bus wiring. This structure is advantageous in easiness to deal with increase in film thickness of bus wiring because no process of tapering is required compared with the second embodiment 2.

The process in this embodiment is the same as that in Figs. 16-18 describing the second embodiment till the tunnel insulation film 12 is formed on the electron source substrate. The duplicate description thereof will be omitted, but the steps on and after the formation of the bus electrode will be described.

In Fig. 27, an upper electrode feeder wiring 16 and a second interlayer insulation layer 15 are formed on the tunnel insulation film 12. In this embodiment, the upper electrode feeder wiring 16 has a two-layer structure of an upper electrode feeder wiring lower layer 16a and an upper electrode feeder wiring upper layer 16b.

As the material of the upper electrode feeder wiring lower layer 16a, high-melting metals such as Ti, Cr, W, etc., Mo, Nb or their silicides are preferable. Particularly, Cr or W is preferred because they can be wet-etched selectively with respect to the second interlayer insulation layer 15. As the material of the upper electrode feeder wiring upper layer 16b, Al or an Al alloy is preferable. Particularly, an Al-Nd alloy doped with 2% by atomic weight of Nd is preferred. Here, films of Cr and the Al-Nd alloy were formed to be 20 nm thick and 500 nm thick respectively by a sputtering method. In this event, the substrate temperature was set to be higher than the room temperature so as to increase the particle size of the Al alloy and make the resistivity thereof lower.

As the material of the second interlayer insulation layer 15, an insulation film material which can be selectively etched with respect to Al or an anodic oxide film thereof is particularly desired. For example, an insulation film material such as Si oxide or Si nitride which can be dry-etched with CF₄ is preferred.

In a dry etching method using fluoride-based etching gas such as CF₄ or the like, Si oxide or Si nitride can be etched at a high selection ratio with respect to Al or an Al alloy of the lower electrode and the anodic oxide film thereof.

Here, Si oxide was used as the second interlayer insulation layer 15, and the film thickness thereof was set to be thick (40 nm with withstand voltage about 40V in this embodiment) enough not to cause insulation breakdown due to the driving voltage Vd (5-10 V in this embodiment) of the thin-film type electron source or the chemical conversion voltage VA (6 V in this embodiment) of the insulation layer 12.

In Fig. 28, the upper electrode feeder wiring 16a and 16b is processed like a stripe in a direction perpendicular to the lower electrode 11 by a photolithographic process and an etching process. As for the wet etching, for example, a mixed aqueous solution (PAN) of phosphoric acid, acetic acid and nitric acid is used for the Al alloy, and a cerium ammonium nitrate solution is used for Cr. In this event, the second interlayer insulation layer 15 plays a role of an etching stopper. Therefore, damage to the first interlayer insulation layer 14 due to the aforementioned wet etching solutions is negligible.

In Fig. 29, a surface protective film is formed. For example, a film generally used as an insulation film in semiconductor devices or the like is available as the surface protective film 17. That is, as the material of the surface protective film 17, SiO, SiO₂, glasses such as phosphor silica glass, borosilicate glass and the like, Si₃N₄, Al₂O₃, polyimide, etc. are available.

In addition, as a film formation method, a sputtering method, a vacuum deposition method, a chemical vapor deposition method, an application method, etc. are available. For example, the sputtering method or the chemical vapor deposition method may be used for forming a film of SiO₂, Al₂O₃, Si₃N₄, etc., the vacuum deposition method may be used for forming a film of SiO₂, and the application method or the like may be used for forming glasses such as phosphor silica glass, borosilicate glass and the like, or polyimide.

In this embodiment, a multilayer film comprised of Si3N4 for the surface protective film lower layer 17a and SiO₂ for the surface protective film upper layer 17b was used, and each layer was set to be 300 nm thick. This surface protective film 17 serves to separate the upper electrode 13 in each pixel from those in other pixels and to protect the electron source element from the atmospheric pressure applied to supports defining the distance with which the electron source substrate and the fluorescent screen substrate are attached to each other, in the stage where the panel display has been completed.

In Fig. 30, in order to open an electron emission portion, a part of the surface protective film 17 is opened by photolithography and dry etching. Mixed gas of CF₄ and O₂ is preferable as dry etching gas. In a dry etching method using fluoride-based etching gas such as CF₄ or the like, an SiO₂ film or an Si₃N₄ film of the surface protective film 17 is etched at a high selection ratio with respect to the Al alloy of the upper electrode feeder wiring 16. Accordingly, only the surface protective film 17 can be processed using the upper electrode feeder wiring upper layer 16b as a stopper film.

In addition thereto, in this embodiment, the two films (the surface protective film lower layer 17a and the surface protective film upper layer 17b) forming the surface protective film 17 are etched at different rates from each other. Accordingly, the interlayer insulation film lower layer 17a suffers larger side etching so that the surface protective film lower layer 17a is set back more widely than the surface protective film upper layer 17b. Thus, an "appentice" structure is formed in this portion.

In Fig. 31, a resist pattern is provided by photolithography, and the upper electrode feeder wiring upper layer 16b in the electron emission portion is removed using the aforementioned mixed aqueous solution (PAN) of phosphoric acid, acetic acid and nitric acid.

Subsequently, as shown in Fig. 32, a resist pattern is provided by photolithography, and the upper electrode feeder wiring lower layer 16a in the electron emission portion is removed using the aforementioned cerium ammonium nitrate solution. In this event, in order to make an electric connection with the upper electrode 13 which would be built later in the electron emission portion, patterning is performed so that the upper electrode feeder wiring lower layer 16a projects from the upper electrode feeder wiring upper layer 16b. Since the thickness of the upper electrode feeder wiring lower layer 16a is mere several tens of nanometers, electric connection with the upper electrode 13 can be secured without stepped cut in this portion.

In Fig. 33, SiO₂ of the second interlayer insulation layer 15 is dry-etched by a photolithographic process and a dry etching process using mixed gas of CF4 and O2, so that the electron emission portion is opened on the inner side of the tunnel insulation film 12.

In a dry etching method using fluoride-based etching gas such as CF₄ or the like, SiO₂ of the second interlayer insulation layer 15 is etched at a high selection ratio with respect to the tunnel insulation film 12 and the first interlayer insulation layer 14 each comprised of an anodic oxide film of an Al alloy. Therefore, damage to the tunnel insulation film 12 can be reduced.

In addition, in this event, the etching conditions were adjusted so that the resist mask was etched at a higher rate than SiO₂ of the second interlayer insulation layer 15. Thus, a gentle dip shape was given to the terminal portion. As a result, disconnection caused by a failure in coating of the upper electrode 13 in this portion could be prevented. The exposed tunnel insulation film 12 is anodized again so that the damage caused by processing is repaired.

Finally, as shown in Fig. 34, the upper electrode film 13 is formed. Thus, the electron source substrate is completed. The upper electrode film 13 is formed by sputtering. As the upper electrodes 13, for example, a laminate of Ir, Pt and Au films is used, and each film is set to be several nanometers thick. In this event, the upper electrodes 13 are separated pixel by pixel due to a failure in coating in the aforementioned "appentice" portion. Thus, incidental contamination or processing damage to the upper electrodes 13 or the tunnel insulation film 12 due to photolithography or the like can be avoided.

In this embodiment, tapering for securing the connection with the upper electrode 13 does not have to be performed on the upper electrode feeder wiring 16. This means that the film thickness of the upper electrode feeder wiring 16 can be set regardless of the selection ratio to the resist. Therefore, the element structure in this embodiment can be regarded as advantageous in reducing the resistance of the feeder wiring 16.

The electron source substrate having the structure according to this embodiment was attached to the fluorescent screen substrate so as to form a cold cathode type flat panel display. As a result, a cold cathode type flat panel display improved in reliability due to reduction in occurrence of pixel defects could be obtained.

Next, a fourth embodiment of the present invention will be described with reference to Figs. 35-43.

This embodiment is similar to the previously described second embodiment 2, in that the opening region of the second interlayer insulation layer 15 is provided inside the region of the tunnel insulation film 12. However, this embodiment is characterized in that a thick anodic oxide film is not used as the second interlayer insulation layer but the first interlayer insulation layer also serves as the second interlayer insulation layer. Compared with the second embodiment, this structure has no treatment for performing thick anodization locally. Therefore, there is an advantage that the manufacturing process can be simplified.

First, as shown in Fig. 35, a lower electrode wiring 11 is formed on a substrate 10 in the same manner as in the second embodiment.

Next, in Fig. 36, the lower electrode wiring 11 is anodized so that a tunnel insulation film 12 is formed all over the surface. This formation conditions comply with the conditions shown in the second embodiment.

In Fig. 37, an upper electrode feeder wiring 16, a second interlayer insulation film lower layer 14a and a second interlayer insulation film upper layer 14b are formed.

In this embodiment, the second interlayer insulation layer 14 is designed to have a two-layer structure. This is because a normal dip shape, that is, a gentle dip shape is given to a terminal portion of the second interlayer insulation layer 14 so as to prevent disconnection due to a failure in coating in the upper electrode 13. For the processing of this dip shape, it will go well if the etching rate ratio of the mask material to the material to be etched is set to be larger than 1 at the time of dry etching.

Here, the second interlayer insulation film upper layer 14b was regarded as the mask material, and a dip structure was introduced using the etching rate difference. However, not to say, the same aim can be gained when the etching conditions (the gas composition and the like) are adjusted using a normal resist pattern as the mask material in place of the second interlayer insulation film upper layer 14b.

Particularly as the material of the second interlayer insulation layer 14, an insulation film material which can be selectively etched with respect to Al or an anodic oxide film thereof is desired. For example, an insulation film material such as Si oxide or Si nitride which can be dry-etched with CF₄ is preferable used. In a dry etching method using fluoride-based etching gas such as CF₄ or the like, Si oxide or Si nitride can be etchedat a high selection ratio with respect to Al or an Al alloy of the lower electrode and the anodic oxide film thereof.

Here, Si oxide was used as the second interlayer insulation layer lower layer 14a, and the film thickness thereof was set to be thick enough not to cause insulation breakdown due to the driving voltage Vd (5-10 V in this embodiment) of the thin-film type electron source or the chemical conversion voltage VA (6 V in this embodiment) of the insulation layer 12. In this embodiment, the thickness was set to be 200 nm (withstand voltage was about 200 V). Silicon nitride SiNX is preferable as the second interlayer insulation layer upper layer 14b. Here, SiOₓ, SiNₓ and the Al alloy were formed as films 200 nm thick, 20 nm thick and 500 nm thick respectively by a sputtering method. When the Al alloy was formed as a film, the temperature of the substrate may be set to be higher than the room temperature so as to increase the particle size of the Al alloy and reduce the resistivity thereof.

In Fig. 38, an upper electrode feeder wiring 16 is processed like a stripe in a direction perpendicular to the lower electrode 11 by a photolithographic process and an etching process. As for the wet etching, for example, a mixed aqueous solution (PAN) of phosphoric acid, acetic acid and nitric acid is used for the Al alloy. In this event, the second interlayer insulation layer 14 plays a role of an etching stopper. Therefore, damage to the lower electrode 11 due to the aforementioned wet etching solution is negligible.

In Fig. 39, a surface protective film 17 is formed. For example, a film generally used as an insulation film in semiconductor devices or the like is available as the surface protective film 17. That is, as the material of the surface protective film 17, SiO, SiO₂, glasses such as phosphor silica glass, borosilicate glass and the like, Si₃N₄, Al₂O₃, polyimide, etc. are available.

In addition, as a film formation method, a sputtering method, a vacuum deposition method, a chemical vapor deposition method, an application method, etc. are available. For example, the sputtering method or the chemical vapor deposition method may be used for forming a film of SiO₂, Al₂O₃, Si₃N₄, etc., the vacuum deposition method may be used for forming a film of SiO₂, and the application method or the like may be used for forming glasses such as phosphor silica glass, borosilicate glass and the like, or polyimide.

In this embodiment, a multilayer film comprised of Si₃N₄ for a surface protective film lower layer 17a and SiO₂ for a surface protective film upper layer 17b was used, and each layer was set to be 300 nm thick. This surface protective film 17 serves to separate the upper electrode 13 in each pixel from those in other pixels and to protect the electron source element from the atmospheric pressure applied to supports defining the distance with which the electron source substrate and the fluorescent screen substrate are attached to each other, in the stage where the panel display has been completed.

In Fig. 40, in order to open an electron emission portion, a part of the surface protective film 17 is opened by photolithography and dry etching. Mixed gas of CF4 and O2 is preferable as dry etching gas. In a dry etching method using fluoride-based etching gas such as CF4 or the like, an SiO₂ film or an Si₃N₄ film of the surface protective film 17 is etched at a high selection ratio with respect to the Al alloy of the upper electrode feeder wiring 16. Accordingly, only the surface protective film 17 can be processed using the upper electrode feeder wiring upper layer 16b as a stopper film.

In addition thereto, in this embodiment, the two films (the surface protective film lower layer 17a and the surface protective film upper layer 17b) forming the surface protective film 17 are etched at different rates from each other. Accordingly, the interlayer insulation film lower layer 17a suffers larger side etching so that an "appentice" structure is formed in this portion.

In Fig. 41, a resist pattern is provided by photolithography, and the upper electrode feeder wiring 16 in the electron emission portion is removed using the aforementioned mixed aqueous solution (PAN) of phosphoric acid, acetic acid and nitric acid. In this event, in order to make an electric connection with the upper electrode 13 which would be built later in the electron emission portion, the resist curing temperature was made lower than usual so that the adhesion force was reduced to allow etching to make progress with peeling. As a result, a normal dip shape, that is, an extremely gentle taper (whose taper angle was not larger than 10 degrees) was provided in a terminal portion of the upper electrode feeder wiring 16.

In Fig. 42, SiNX of the second interlayer insulation film upper layer 14b and SiOₓ of the second interlayer insulation film lower layer 14a are dry-etched by a photolithographic process and a dry etching process using mixed gas of CF4 and 02, so that an electron emission portion is opened. In a dry etching method using fluoride-based etching gas such as CF₄ or the like, the second interlayer insulation layer 14 is etched at a high selection ratio with respect to the tunnel insulation film 12 comprised of an anodic oxide film of an Al alloy. Therefore, damage to the tunnel insulation film 12 can be reduced.

In addition, under the normal conditions, SiNₓ of the second interlayer insulation film upper layer 14b is etched at a higher rate than SiOₓ of the second interlayer insulation film lower layer 14a. Thus, a gentle dip shape is provided. The exposed tunnel insulation film 12 is anodized again so that the damage caused by processing is repaired.

Finally, in Fig. 43, the upper electrode film 13 is formed. Thus, the electron source substrate is completed. The upper electrode film 13 is formed by sputtering. As the upper electrodes 13, for example, a laminate of Ir, Pt and Au films is used, and each film is set to be several nanometers thick. In this event, the upper electrodes 13 are separated pixel by pixel due to a failure in coating in the aforementioned "appentice" portion. Thus, incidental contamination or processing damage to the upper electrodes or the tunnel insulation film 12 due to photolithography or the like can be avoided.

In the structure according to this embodiment, there is no first interlayer insulation layer comprised of a thick anodic oxide film as in the aforementioned first to third embodiments. Therefore, the structure in this embodiment can be regarded as an element structure advantageous in simplifying the manufacturing process because the anodic oxide film formation process can be omitted.

The electron source substrate having the structure according to this embodiment was attached to the fluorescent screen substrate so as to form a cold cathode type flat panel display. As a result, a cold cathode type flat panel display improved in reliability due to reduction in occurrence of pixel defects could be obtained.

Next, another configuration example of the cold cathode type flat panel display according to the present invention will be described with reference to Figs. 44-48.

Fig. 44 is a schematic view for explaining the structure of an electron source substrate of the cold cathode type flat panel display using thin-film type electron sources according to the second embodiment of the present invention. The thin-filmtype electron sources of the electron source substrate are MIM type electron sources. Incidentally, the same thing can be applied to the electron source substrates having the thin-f ilmtype electron sources described in the second to fourth embodiments.

In Fig. 44, the same reference numerals as those in the aforementioned respective embodiments represent portions having the same functions as those in the embodiments correspondingly.

First, MIM type electron sources are manufactured on the substrate 10 according to the manner of the second embodiment. Here, description will be made with a plan view of MIM type electron source substrate having (3×3) dots, and sectional views thereof. In fact, however, a matrix of MIM type electron sources whose number corresponds to the number of display dots are formed. Though not described in the first to fourth embodiments, when the MIM type electron source matrix is used for a display device, electrode surfaces of electrode terminal portions of the lower electrode 11 and the upper electrode feeder wiring 16 must be exposed for connection with a drive circuit which will be described later.

Fig. 45 is a schematic view for explaining an example of a fluorescent screen substrate forming the cold cathode type flat panel display according to the present invention. The reference numeral 110 represents a face plate constituting the fluorescent screen substrate; 111, red phosphor; 112, green phosphor; 113, blue phosphor; 114, a metal back layer; and 120, a black matrix. A method for manufacturing the fluorescent screen substrate shown in Fig. 45 will be described.

Translucent glass or the like is used as the face plate 110. First, the black matrix 120 is formed on the face plate 110 in order to increase the contrast of the panel display. This black matrix 120 is formed as follows. A mixed solution of PVA (polyvinyl alcohol) and ammonium dichromate is applied to the face plate 110. The face plate 110 other than the portion
where it is intended to form the black matrix 120 is irradiated with ultraviolet light and exposed thereto. After that, the portion which has not been exposed with the light is removed. A solution in which graphite powder has been dissolved is applied to the portion, and the PVA is lifted off. Thus, the black matrix 120 is formed.

Next, the red phosphor 111 is formed. An aqueous solution in which PVA and ammonium dichromate have been mixed with red phosphor particles is applied onto the face plate 110. The portion where the red phosphor should be formed is irradiated with ultraviolet light and exposed thereto. The portion which has not been exposed to the light is removed by running water.

The red phosphor 111 is patterned thus. This pattern is made into a stripe as shown in Fig. 45. In the same manner, the green phosphor 112 and the blue phosphor 113 are formed.

For example, Y2O2S:Eu(P22-R), ZnS:Cu,Al(P22-G) and ZnS:Ag (P22-B) can be used as the red, green, and blue phosphors respectively.

After the three color phosphors are formed, these phosphors are filmed with nitrocellulose or the like, and Al is deposited all over the face plate 110 so as to further cover the filming and have a film thickness of about 75 nm. Thus, the metal back layer 114 is formed. This metal back layer 114 serves as an acceleration electrode (anode). After that, the face plate 110 is heated to about 400°C in the atmosphere so that organic matters such as the filming, the PVA, etc. are pyrolized. The fluorescent screen substrate, that is, the display-side substrate is completed thus.

Fig. 46 is an explanatory view of the configuration of the cold cathode type flat panel display in which the electron source substrate shown in Fig. 44 and the fluorescent screen substrate shown in Fig. 45 have been attached to each other. (a) of Fig. 46 is a schematic sectional view corresponding to a section taken on line A-A' in Fig. 45, and (b) of Fig. 46 is a schematic sectional view corresponding to a section taken on line B-B' in Fig. 45 likewise.

A circumferential frame 116 is attached to the fluorescent screen substrate 110 described in Fig. 45 and the electron source substrate 10 through spacers 30 so as to seal up them using an adhesive such as frit glass 115 or the like. The height of the spacers 30 is set so that distance between the face plate 110 of the fluorescent screen substrate and the substrate 10 of the electron source substrate is about 1-3 mm. As the spacers 30, for example, glass plates or ceramics plates are used, and these are disposed on the upper electrode feeder wirings 16.

When these spacers 30 are disposed under the black matrix 120 included in the fluorescent screen substrate 110, the spacers 3 are prevented from blocking the light generated from the phosphors.

Here, for the sake of explanation, the spacers 30 are set up for individual dots generating red, green and blue lights, that is, on all the upper electrode feeder wirings 16. In fact, the number (density) of spacers 30 may be reduced within a range allowed by the mechanical strength, and the spacers 30 may be set up at intervals of about 1 cm.

Fig. 46 show the spacers 30 are plate-like spacers provided in parallel with one direction. However, columnar spacers or a lattice spacer may be used instead to assemble the fluorescent screen substrate 110 and the electron source substrate 10. An air release pipe (not shown) is provided in the fluorescent screen substrate 110, the electron source substrate 10 or the frame 116, and a getter material is received in a position clear of the display region.

The fluorescent screen substrate 110 and the electron source substrate 10 are sealed by the frame 116. For this sealing, it is desired to use the frit glass 115. After sealing, the sealed interior is pumped to a vacuum of about 10⁻⁷ Torr through a not-shown air release pipe, and sealed up. After sealing up, the getter material is activated to keep the sealed interior in a high vacuum. For example, in the case of an evaporative getter material having Ba as its main component, the getter material is evaporated by high-frequency induction heating or the like so as to form a getter film. Alternatively, a non-evaporative getter material having Zr as its main component may be used. In such a manner, a cold cathode type flat panel display using MIM type electron sources is completed.

In the cold cathode type flat panel display, the distance between the face plate 110 and the substrate 10 is long to be about 1-3 mm, so that an acceleration voltage applied to the metal back layer 114 can be set at a high voltage to be 1-10 KV. Thus, phosphors for the aforementioned cathode-ray tube (CRT) can be used as the phosphors.

Fig. 47 is a circuit connection diagram for explaining an example of a driving system of the cold cathode type flat panel display according to the present invention. Fig. 48 is a driving voltage waveform chart in the driving system in Fig. 47. In Fig. 47, the lower electrodes 11 are connected to a scanning line drive circuit 40, and the upper electrode feeder wirings 16 are connected to a signal line drive circuit 50. In order to simplify the description, in Fig. 47, the display region of the cold cathode type flat panel display is shown by (3×3) pixels, the scanning line drive circuit 40 has scanning line power feed circuits S1, S2 and S3, and the signal line drive circuit 50 has signal line power feed circuits D1, D2 and D3.

Accordingly, the display region is constituted by (mxn) pixels where m=3 and n=3 here, and the scanning line drive circuit 40 is constituted by scanning line power feed circuits Sm (m=1, 2, 3), while the signal line drive circuit 50 is constituted by signal line power feed circuits Dn (n=1, 2, 3).

A pixel located in a node between the scanning line power feed circuit Sm connected to the m-th upper electrode feeder wiring 16 and the signal line power feed circuit Dn connected to the n-th lower electrode 11 is expressed by coordinates (m, n). A DC acceleration voltage of about 1-10 KV from a power supply circuit 60 is always supplied to the metal back layer 114.

An example of a voltage waveform generated in the circuit of Fig. 47 will be described with reference to Fig. 48. At a time t0, the voltage of each electrode is zero. Therefore, no electron is released, and no phosphor emits light. At a time t=t1, a voltage of -V1 is applied only to the scanning line power feed circuit S1 connected to the lower electrode wirings 11, while a voltage of V2 is applied to the signal line power feed circuits D2 and D3 connected to the upper electrode power feed wirings 16.

In each of the pixel at the coordinates (1, 2) and the pixel at the coordinates (1, 3), a voltage of (V1+V2) is applied between the lower electrode 11 and the upper electrode feeder wiring 16. Therefore, when the (V1+V2) is set to be not lower than the electron emission start voltage, electrons are emitted from these MIM type electron sources into the vacuum. The emitted electrons are accelerated by an acceleration voltage of about 1-10 KV applied to the metal back layer 114 of the fluorescent screen substrate. After that, the electrons incident on the phosphors excite the phosphors so as to make the phosphors emit light. Thus, the phosphors are turned on.

In the same manner, at a time t=t2, a voltage of -V1 is applied only to the scanning line power feed circuit S2 connected to the lower electrode wirings 11, while a voltage of V2 is applied to the signal line power feed circuit D3 connected to the upper electrode power feed wirings 16. Thus, the pixel at the coordinates (2, 3) is turned on.

In such a manner, it is possible to display an image in a so-called line-sequential drive system in which a desired scanning line is selected by changing a voltage signal applied to the lower electrode wirings 11, and gradation expression is performed by suitably changing the magnitude of the voltage V2 applied to the upper electrode feeder wirings 16.

At a time t=t5, an inverted voltage for releasing the charges accumulated in the tunnel insulation film 12 is applied. That is, a voltage V3 is applied to all the lower electrode wirings 11, and at the same time, 0V is applied to all the upper electrode feeder wirings 16.

The aforementioned discussion can be applied directly to other electron sources that are not disclosed here, for example, hot-electron type electron sources such as MIS type electron sources, ballastic electron surface-emitting device (BSD) type electron sources, etc.

That is, in order to prevent time zero failure in insulation between the upper electrode feeder wiring and the lower electrode wiring, it is effective to arrange an interlayer insulation film in which a plurality of insulation films different in film formation method, such as a thermal oxidation method, a deposition method, etc. are laminated.

In addition thereto, when an electron emission region is defined by an opening portion of an insulation film formed by the deposition method, which film is one of the aforementioned plurality of insulation films, it is possible to avoid dangling bonds or crystal defects which may be produced in a semiconductor due to local oxidation. Accordingly, it is possible to provide a reliable flat panel display superior in time dependent insulation breakdown in a tunnel insulation film with respect to hot electron injection.

Next, a fifth embodiment of the present invention will be described with reference to Figs. 49-62. Fig. 49 is a main portion sectional view for schematically explaining an electron emission portion of an electron source substrate for explaining the fifth embodiment of the cold cathode type flat panel display according to the present invention. In the drawing, the reference numeral 10 represents a substrate; 11, a lower electrode; 12, a tunnel insulation layer; 13, an upper electrode; 14, a first interlayer insulation layer; 15, a second interlayer insulation layer; 16, an upper electrode feeder wiring; 16a, an upper electrode feeder wiring lower layer; and 16b, an upper electrode feeder wiring upper layer. In addition, the reference numeral 17 represents a surface protective layer.

This embodiment is designed so that the second interlayer insulation layer 15 is provided under the upper electrode feeder wiring 16. Accordingly, even when there is a defect in the first interlayer insulation layer 14, electric strength can be secured. The second interlayer insulation layer 15 can serve to prevent insulation breakdown of the first interlayer insulation layer 14 due to a driving voltage Vd or a chemical conversion voltage VA applied during anodization performed after the formation of the upper electrode feeder wiring 16.

A method for manufacturing the electron source substrate according to this embodiment will be described with reference to Figs. 50-59. Incidentally, in Figs. 50-59, (a) shows a plan view, (b) shows a sectional view taken on line A-A' in (a), and (c) shows a sectional view taken on line B-B' in (a).

First, as shown in Fig. 50, a metal film which will serve as the lower electrode 11 is formed on the insulating substrate 10 of glass or the like. As the material of this metal film, Al or an Al alloy is used. The reason why Al or an Al alloy is used for the metal film which will serve as the lower electrode 11 is that a high-quality insulation film can be formed by anodization. Here, an Al-Nd alloy doped with 2% by atomic weight of Nd was used.

For example, a sputtering method was used for forming this film, and the film thickness was made 300 nm. After the film formation, the lower electrode 11 having a stripe shape is formed by a photolithographic process and an etching process. For the etching, for example, a mixed aqueous solution (PAN) of phosphoric acid, acetic acid and nitric acid is used.

Next, the first interlayer insulation layer 14 and the tunnel insulation film 12 are formed. As shown in Fig. 51, a portion which will be an electron emission portion on the lower electrode 11 is covered with a resist film 19, and the other portion is selectively anodized thickly and formed as the first interlayer insulation layer 14. When the chemical conversion voltage in this event is set at 100 V, the first interlayer insulation layer 14 is formed to be about 136 nm thick. Next, as shown in Fig. 52, the resist film 19 is removed, and the remaining surface of the lower electrode 11 is anodized. When the chemical conversion voltage in this event is set at 6 V, the tunnel insulation layer 12 is formed to be about 10 nm thick on the lower electrode 11.

In Fig. 53, the upper electrode feeder wiring lower layer 16a which will serve as a power feed line to the upper electrode 13, and the second interlayer insulation layer 15 are formed, for example, by a sputtering method etc. Particularly as the material of the second interlayer insulation layer 15, an insulation material which can be selectively etched with respect to Al or an anodic oxide film thereof is desired. For example, in a dry etching method using fluoride-based etching gas such as CF₄ or the like, Si oxide or Si nitride can be etched at a high selection ratio with respect to Al or an Al alloy of the lower electrode 11 and the anodic oxide film thereof.

Here, Sioxide (SiO₂ here) was used as the second interlayer insulation layer 15, and the film thickness thereof was set to be thick (40 nm with withstand voltage about 40V in this embodiment) enough not to cause insulation breakdown due to the driving voltage Vd (5-10 V in this embodiment) of the thin-film electron source or the chemical conversion voltage VA (6 V in this embodiment) of the tunnel insulation layer 12.

On the other hand, a laminated film was used as the upper electrode feeder wiring layer 16. In this embodiment, tungsten (W) was used as the material of the upper electrode feeder wiring lower layer 16a, and an Al-Nd alloy was used as the material of the upper electrode feeder wiring upper layer 16b. The upper electrode feeder wiring lower layer 16a is formed to be thin approximately from several nanometers to several tens of nanometers, enough to prevent the upper electrode 13 from being broken due to the step of the upper electrode feeder wiring lower layer 16a. On the other hand, the upper electrode feeder wiring upper layer 16b is formed to have a thickness of about several hundreds of nanometers, enough to secure enough power supply and serve as a stopper film when the surface protective layer 17 is etched.

Subsequently, as shown in Fig. 54, the upper electrode feeder wiring upper layer 16b and the upper electrode feeder wiring lower layer 16a are processed and formed by a photo-etching process so as to cross the lower electrode 11 at right angles. As for this etching, wet etching using the aforementioned mixed aqueous solution (PAN) of phosphoric acid, acetic acid and nitric acid is performed on the Al-Nd alloy of the upper electrode feeder wiring upper layer 16b. On the other hand, wet etching in a mixed aqueous solution of ammonia and hydrogen peroxide, plasma etching using CF4 gas and 02 gas, or the like, may be applied to W of the upper electrode feeder wiring lower layer 16a.

In the plasma etching using CF₄ gas and O₂ gas, SiO₂ of the second interlayer insulation layer 15 is also etched to some extent. In order to attain the object of the present invention, however, there is no problem because it will go well only if the second interlayer insulation layer 15 is under the upper electrode feeder wiring 16. Incidentally, Fig. 54 shows the case where plasma etching was performed.

Next, as shown in Fig. 55, an insulation film which will serve as the surface protective film 17 is formed. For example, a film generally used as an insulation film in semiconductor devices or the like is available as the surface protective layer 17. That is, as the material of the surface protective film 17, SiO, SiO₂, glasses such as phosphor silica glass, borosilicate glass and the like, Si₃N₄, Al₂O₃, polyimide, etc. are available.

In addition, as a film formation method, a sputtering method, a vacuum deposition method, a chemical vapor deposition method, an application method, etc. are available. For example, the sputtering method or the chemical vapor deposition method may be used for forming a film of SiO₂, Al₂O₃, Si₃N₄, etc., the vacuum deposition method may be used for forming a film of SiO₂, and the application method or the like may be used for forming glasses such as phosphor silica glass, borosilicate glass and the like, or polyimide. In this embodiment, Si₃N₄ was formed to be 0.3-1 µm thick by a sputtering method.

Subsequently, in Fig. 56, a region including an electron emission portion is opened in the surface protective film 17 by a photo-etching process. For this processing, for example, a dry etching method etc. using CF₄ or the like is used. In a dry etching method using fluoride-based etching gas such as CF₄ or the like, the Si₃N₄ film of the surface protective film 17 is etched at a high selection ratio with respect to the Al alloy of the upper electrode feeder wiring upper layer 16b. Accordingly, only the surface protective film 17 can be processed using the upper electrode feeder wiring upper layer 16b as a stopper film.

In Fig. 57, wet etching using a mixed aqueous solution (PAN) of phosphoric acid, acetic acid and nitric acid is performed on the upper electrode feeder wiring upper layer 16b in the electron emission portion. The Si₃N₄ film serving as the surface protective film 17, W of the upper electrode feeder wiring lower layer 16a and SiO₂ of the second interlayer insulation layer 15 are hardly etched. Accordingly, only the upper electrode feeder wiring upper layer 16b is etched at a high selection ratio. Therefore, the upper electrode feeder wiring upper layer 16b is set back more widely than the surface protective layer 17. Thus, the opening portion is formed into an "appentice" shape.

Next, as shown in Fig. 58, W of the upper electrode feeder wiring lower layer 16a and SiO₂ of the second interlayer insulation layer 15 are dry-etched together by a photo-etching process and a dry etching process using CF₄ gas and O₂ gas so as to open the electron emission portion. In this event, W of the upper electrode feeder wiring lower layer 16a is processed to extend on the electron emission portion side as compared with the upper electrode feeder wiring upper layer 16b and the surface protective layer 17. Thus, the contact with the upper electrode 13 which will be formed later can be secured.

In a dry etching method using fluoride-based etching gas such as CF₄ or the like, W of the upper electrode feeder wiring lower layer 16a and SiO₂ of the surface protective layer 17 are etched at a high selection ratio with respect to the tunnel insulation film 12 and the first interlayer insulation layer 14 each comprised of an anodic oxide film of an Al alloy. Therefore, damage to the tunnel insulation film 12 can be reduced.

When SiO₂, Si₃N₄, W, etc. which can be processed by a dry etching process using fluoride-based etching gas such as CF₄ or the like is used for the second interlayer insulation layer 15 and the upper electrode feeder wiring lower layer 16a abutting against this second interlayer insulation layer 15 as in this embodiment, there is an advantage that the process can be simplified while the second interlayer insulation layer 15 is formed to be self-aligned under the upper electrode feeder wiring lower layer 16a by batch etching.

Next, the tunnel insulation film 12 is anodized again so that the damage thereto is repaired. In this embodiment, the reanodization can be performed normally because the second interlayer insulation layer 15 is provided under the upper electrode feeder wiring lower layer 16a.

In Fig. 59, finally a film of the upper electrodes 13 is formed after the damage is repaired by the reanodization of the tunnel insulation layer 12. For example, a sputtering method is used for this film formation. As the film of the upper electrodes 13, for example, a laminate of Ir, Pt and Au films is used, and each film is several nanometers thick (here set to be 5 nm thick). The thin film formed as thin upper electrodes 13 is divided and separated by each electron source due to the step having the "appentice" shape and formed in the opening portion of the surface protective layer 17. In addition, there is formed a structure in which each upper electrode 13 abuts against W of the upper electrode feeder wiring lower layer 16a extending on the electron emission portion side as compared with the upper electrode feeder wiring upper layer 16b and the surface protective layer 17, so as to be supplied with power therefrom.

In this embodiment, the tunnel insulation layer 12 is formed by anodization in advance before the upper electrode feeder wiring 16 is formed. After the upper electrode feeder wiring 16 etc. are processed, damage to the tunnel insulation layer 12 is repaired by reanodization thereof. Alternatively, the tunnel insulation layer 12 may be anodized only after the upper electrode feeder wiring 16 etc. are processed. In this method, anodization can be performed only one time. Therefore, the process can be shortened. Particularly in the structure according to this embodiment, the upper electrode feeder wiring upper layer 16b and the second interlayer insulation layer 15 protects the lower electrode 11 doubly when the upper electrode feeder wiring upper layer 16b is wet-etched. Accordingly, the electrode surface of the lower electrode 11 hardly becomes rough, but a high-quality tunnel insulation layer 12 can be formed.

Fig. 60 is a schematic explanatory view of an electron source substrate according to the fifth embodiment of the present invention. (a) of Fig. 60 shows a plan view, (b) of Fig. 60 shows a sectional view taken on line A-A' in (a) of Fig. 60, and (c) of Fig. 60 shows a sectional view taken on line B-B' in (a) of Fig. 60. In addition, Fig. 61 is a schematic explanatory view of a fluorescent screen substrate to be combined with the electron source substrate shown in Fig. 60. (a) of Fig. 61 shows a plan view, (b) of Fig. 61 shows a sectional view taken on line A-A' in (a) of Fig. 61, and (c) of Fig. 61 shows a sectional view taken on line B-B' in (a) of Fig. 61. Incidentally, only (3×3) pixels are shown for the sake of explanation.

The fluorescent screen substrate is manufactured as follows. As shown in Fig. 61, a black matrix 120 is formed on a face plate 110 preferably made of translucent glass, in order to increase the contrast of a display image. This black matrix 120 is formed as follows. A mixed solution of PVA (polyvinyl alcohol) and ammonium dichromate is applied to the face plate 110, and dried to form a PVA coating. Of the PVA coating, any portion other than the portion where the black matrix 120 should be formed is irradiated with ultraviolet light and exposed thereto through a predetermined exposure mask.

The portion of the PVA coating which has not been exposed with the light is removed while the portion of the PVA coating which has been exposed with the light is left. A solution in which graphite powder has been dissolved is applied to the aforementioned portion from which the PVA coating has been removed. After drying, the PVA coating is lifted off. Thus, the black matrix 120 is formed.

Next, an aqueous solution in which PVA and ammonium dichromate have been mixed with red phosphor substances is applied onto the face plate 110 where the black matrix 120 has been formed. The portion which will serve as phosphor is irradiated with ultraviolet light and exposed thereto. The portion which has not been exposed to the light is removed by running water. Red phosphor 111 is patterned thus. In this embodiment, the pattern is made into a stripe. In the same manner, green phosphor 112 and blue phosphor 113 are formed.

For example, Y₂O₂S:Eu (P22-R), ZnS:Cu,Al(P22-G) and ZnS:Ag,Cl(P22-B) can be used as the red, green, and blue phosphor substances respectively.

Next, the phosphors are filmed with nitrocellulose or the like. After that, Al is deposited all over the face plate 110 so as to have a film thickness of about 75 nm. Thus, the metal back layer 114 is formed. This metal back layer 114 serves as an acceleration electrode (anode). After that, the face plate 110 is heated to about 400°C in the atmosphere so that organic matters such as the filming, the PVA, etc. are pyrolized. The fluorescent screen substrate, that is, the display-side substrate is completed thus.

Fig. 62 is a sectional view for explaining the configuration of the cold cathode type flat panel display in which the electron source substrate shown in Fig. 60 and the fluorescent screen substrate shown in Fig. 61 have been attached to each other. (a) of Fig. 62 corresponds to a section taken on line A-A' in (a) of Fig. 61, and (b) of Fig. 62 corresponds to a section taken on line B-B' in (a) of Fig. 61.

A circumferential frame 116 is attached to the electron source substrate and the fluorescent screen substrate through spacers 30 so as to seal up them using an adhesive preferably frit glass. The height of the spacers 30 is set so that the distance between the electron source substrate and the fluorescent screen substrate is about 1-3 mm. The spacers 30 are set on the surface protective layer 17 of the electron source substrate. Here, for the sake of explanation, the spacers 30 are provided for individual pixels of red, green and blue. In fact, the density with which the spacers are placed may be selected within a range allowed by the mechanical strength. For example, the spacers may be placed at intervals of about 1 cm. A process after the sealing is similar to that described in Fig. 46. Inaddition, the drive circuit system is also similar to that described in Figs. 47 and 48. Therefore, repetitive description will be omitted.

Also in this embodiment, it is possible to avoid dangling bonds or crystal defects which may be produced in a semiconductor due to local oxidation. Accordingly, it is possible to provide a reliable flat panel display superior in time dependent insulation breakdown in a tunnel insulation film with respect to hot electron injection.

### [Industrial Availability]

As has been described, according to the present invention, it is possible to provide a high-reliable cold cathode type flat panel display in which a failure of initial (time zero) insulation breakdown is prevented, the manufacturing yield can be improved, and a failure of time dependent insulation breakdown is suppressed, so that the operating life is secured.

## Claims

1. A cold cathode type flat panel display comprising:
a first substrate including thin-film type electron sources arranged in arrays, each of said thin-film type electron sources including a lower electrode, an upper electrode and an electron acceleration layer retained between said lower electrode and said upper electrode, each of said thin-film type electron sources emitting electrons from said upper electrode in response to a voltage applied between said lower electrode and said upper electrode; and
a second substrate including a fluorescent screen in which a plurality of phosphors to be excited by said electrons emitted from said first substrate are arrayed;
said cold cathode type flat panel display being **characterized in that** each of said arrays of said thin-film type electron sources includes a first interlayer insulation layer and an upper electrode feeder wiring serving as a power feed line to said upper electrode; and
a second interlayer insulation layer is provided between said electron acceleration layer and said upper electrode.

2. A cold cathode type flat panel display according to Claim 1, **characterized in that**:
said lower electrode is made of aluminum or an aluminum alloy;
said electron acceleration layer and said first interlayer insulation layer are anodic oxide films of said aluminum or aluminum alloy forming said lower electrode; and
said second interlayer insulation layer is made of an insulation film material which can be etched selectively with respect to said lower electrode and said anodic oxide films of said aluminum or aluminum alloy forming said lower electrode.

3. A cold cathode type flat panel display according to Claim 2, **characterized in that**:
a terminal portion of said second interlayer insulation layer surrounding an electron acceleration region has a normal dip shape.

4. A cold cathode type flat panel display according to Claim 2, **characterized in that**:
said second interlayer insulation layer has a structure of a plurality of layers; and
said second interlayer insulation layer has a normal dip shape in a terminal portion thereof surrounding an electron emission region, said normal dip shape being formed using a difference in etching rate among said layers.

5. A cold cathode type flat panel display comprising a substrate and a fluorescent screen, said substrate including thin-film type electron sources arranged in arrays, each of said thin-filmtype electron sources including a lower electrode, an upper electrode and an electron acceleration layer retained between said lower electrode and said upper electrode, each of said thin-film type electron sources emitting electrons from said upper electrode in response to a voltage applied between said lower electrode and said upper electrode; said cold cathode type flat panel display being
**characterized in that**:
each of said arrays of said thin-film type electron sources includes a first interlayer insulation layer and an upper electrode feeder wiring serving as a power feed line to said upper electrode; and
a region for emitting electrons is surrounded by a second interlayer insulation layer put between said electron acceleration layer and said upper electrode.

6. A cold cathode type flat panel display according to Claim 5, **characterized in that**:
said lower electrode is made of aluminum or an aluminum alloy, while said electron acceleration layer and said first interlayer insulation layer are anodic oxide films of said aluminum or aluminum alloy; and
said second interlayer insulation layer is made of an insulation film material which can be etched selectively with respect to said lower electrode and said anodic oxide films.

7. A cold cathode type flat panel display according to Claim 5, **characterized in that**:
a terminal portion of said second interlayer insulation layer surrounding said electron emission region has a normal dip shape.

8. A cold cathode type flat panel display according to Claim 5, **characterized in that**:
said second interlayer insulation layer has a structure of a plurality of layers; and
said second interlayer insulation layer has a normal dip shape in a terminal portion thereof surrounding said electron emission region, said normal dip shape being formed using a difference in etching rate among said layers.
